# EUROPEAN PATENT APPLICATION

(11) **EP 3 889 891 A1**
(43) Date of publication of application: **06.10.2021**
(21) Application number: 20880432.8
(22) Date of filing: 03.09.2020
(51) Int. Cl.: G06T 7/00, G06F 16/50

(54) **IMAGE PROCESSING DEVICE, IMAGE PROCESSING METHOD, AND PROGRAM**

(30) Priority: 30.10.2019 JP 2019197193
(71) Applicant: NTT Advanced Technology Corporation, Kawasaki-shi, Kanagawa 212-0014 (JP)
(72) Inventor: OTSUKA Tomoki, Kawasaki-shi, Kanagawa 212-0014 (JP); KANDA Naoiku, Kawasaki-shi, Kanagawa 212-0014 (JP); SHIMADA Hidemasa, Kawasaki-shi, Kanagawa 212-0014 (JP); TAKAHASHI Jun, Kawasaki-shi, Kanagawa 212-0014 (JP)
(74) Representative: Brevalex
(86) International application number: PCT/JP2020/033446
(87) International publication number: WO 2021/084904

(57) **Abstract**

An image processing device includes a search scenario acquisition unit and a search unit. The search scenario acquisition unit acquires a search scenario in which one or more search processes of searching for an image using an image feature based on a target image, which is an image of a search target, in a search condition are combined. The search unit searches for a matching image, which is an image to be searched, using a combination of the search processes represented by the search scenario and outputs search result information representing an area in the matching image detected through the search.

## Description

### [Technical Field]

The present invention relates to an image processing device, an image processing method, and a program.

Priority is claimed on Japanese Patent Application No. 2019-197193, filed October 30, 2019, the content of which is incorporated herein by reference.

### [Background Art]

Robotic process automation (RPA), which is a type of automation tool, is technology for automatically executing a routine task for an application that has been manually executed by operating a user interface of an information processing device such as a personal computer (PC). For example, a PC executes a scenario that describes a task procedure so as to reproduce a task that has been performed manually. By means of RPA, time costs and manpower costs can be reduced, and the number of task mistakes can be reduced.

An interface for receiving an operation from an external application like an application programming interface (API) may not be provided in an application. In this case, there is a method of describing a scenario so that a position within an application screen serving as an operation object is calculated using computer vision (CV) and an operation of a user interface is performed at coordinates that have been calculated. The application screen is a screen that the application displays on a display device. By describing the above scenario, for example, it is possible to cause a PC to calculate a position of an image of an icon by means of CV and to enable an operation such as a click at the calculated position to be executed. CV technology such as template matching is used to calculate a position of an image (see, for example, Non-Patent Literature 1 and 2). In template matching, an image similar or identical to a template image which is a target image of detection is detected within a matching image to be searched.

### [Citation List]

### [Non-Patent Literature]

[Non-Patent Literature 1] Junichi Ido, "Matching," [online], September 26, 2007, OpenCV.jp, [found on October 7, 2019], Internet <URL: http://opencv.jp/sample/matching.html>
[Non-Patent Literature 2] Digital Image Processing [Revised New Edition] Editorial Committee, "Detection of Patterns by Template Matching," Digital Image Processing [Revised New Edition], Public Interest Incorporated Foundation Image Information Education Promotion Association (CG-ARTS Association), March 2015, Chapter 11 Section 1, pp. 218-220

### [Summary of Invention]

### [Technical Problem]

When a user creates an RPA scenario using conventional template matching and the PC executes the scenario, a scenario execution error may occur because it fails to detect the template image. In this case, although the user can recognize a result of a template matching failure, often it may not be possible to ascertain a cause of the failure. Also, even if the cause can be ascertained, the user may not know how to describe the scenario to improve a success rate of template matching.

In view of the above circumstances, an objective of the present invention is to provide an image processing device, an image processing method, and a program capable of easily detecting a target image included in a display screen.

### [Solution to Problem]

One aspect of the present invention is an image processing device including: a search scenario acquisition unit configured to acquire a search scenario in which one or more search processes of searching for an image using an image feature based on a target image, which is an image of a search target, in a search condition are combined; and a search unit configured to search for a matching image, which is an image to be searched, using a combination of the search processes represented by the search scenario and output search result information representing an area in the matching image detected through the search.

One aspect of the present invention is the above-described image processing device further including a search scenario creation unit configured to create the search scenario according to an input of a user; and a trial unit configured to search for the matching image designated through the input of the user using the combination of the search processes represented by the search scenario being created by the search scenario creation unit and output search result information representing an area in the matching image detected through the search.

One aspect of the present invention is the above-described image processing device, wherein the combination of the search processes includes a logical OR operation, a logical AND operation, or a weighted addition operation.

One aspect of the present invention is the above-described image processing device, wherein the search condition is a feature related to a color used in the target image, a feature related to a shape of the target image, an attended area in the matching image, or a change based on an operation of a user interface.

One aspect of the present invention is an image processing method including: an acquisition step of acquiring a search scenario in which one or more search processes of searching for an image using an image feature based on a target image, which is an image of a search target, in a search condition are combined; and a search step of searching for a matching image, which is an image to be searched, using a combination of the search processes represented by the search scenario and outputting search result information representing an area in the matching image detected through the search.

One aspect of the present invention is a program for causing a computer to function as the image processing device according to any one of the above-described aspects.

### [Advantageous Effects of Invention]

According to the present invention, it is possible to easily detect a target image included in a display screen.

### [Brief Description of Drawings]

Fig. 1 is a functional block diagram showing a configuration of a scenario execution device according to an embodiment of the present invention.
Fig. 2 is a diagram showing a display example of a scenario creation screen according to the embodiment.
Fig. 3 is a diagram showing a display example of a scenario creation screen according to the embodiment.
Fig. 4 is a diagram showing a display example of a scenario creation screen according to the embodiment.
Fig. 5 is a flowchart showing a scenario creation process of the scenario execution device according to the embodiment.
Fig. 6 is a flowchart showing a scenario execution process of the scenario execution device according to the embodiment.
Fig. 7 is a diagram for describing an outline of an image recognition module according to the embodiment.
Fig. 8 is a diagram showing an example of a search scenario according to the embodiment.
Fig. 9 is a flowchart showing a search scenario file creation process of a scenario execution device according to the embodiment.
Fig. 10 is a flowchart showing an image recognition module execution process of the scenario execution device according to the embodiment.
Fig. 11 is a diagram showing a display example of an image matching editor screen according to the embodiment.
Fig. 12 is a diagram showing a display example of a target image creation screen according to the embodiment.
Fig. 13 is a diagram showing a display example of a search scenario editing screen according to the embodiment.
Fig. 14 is a diagram showing a display example of a search condition setting screen according to the embodiment.
Fig. 15 is a diagram showing a display example of a search condition setting screen according to the embodiment.
Fig. 16 is a diagram showing a display example of a search condition setting screen according to the embodiment.
Fig. 17 is a diagram showing a display example of a search condition setting screen according to the embodiment.
Fig. 18 is a diagram showing a display example of a search condition setting screen according to the embodiment.
Fig. 19 is a diagram showing a display example of a search condition setting screen according to the embodiment.
Fig. 20 is a diagram showing a display example of a search condition setting screen according to the embodiment.
Fig. 21 is a flowchart showing a search process using a feature color search function of the scenario execution device according to the embodiment.
Fig. 22 is a flowchart showing a search process using an icon discrimination function of the scenario execution device according to the embodiment.
Fig. 23 is a flowchart showing a search process using a rectangle detection function of the scenario execution device according to the embodiment.
Fig. 24 is a flowchart showing a search process using a circle detection function of the scenario execution device according to the embodiment.
Fig. 25 is a flowchart showing a search process using a circle fitting function of the scenario execution device according to the embodiment.
Fig. 26 is a flowchart showing a search process using an attended location extraction function of the scenario execution device according to the embodiment.
Fig. 27 is a flowchart showing a search process using a similar color histogram area search function of the scenario execution device according to the embodiment.

### [Description of Embodiments]

Hereinafter, embodiments of the present invention will be described in detail with reference to the drawings.

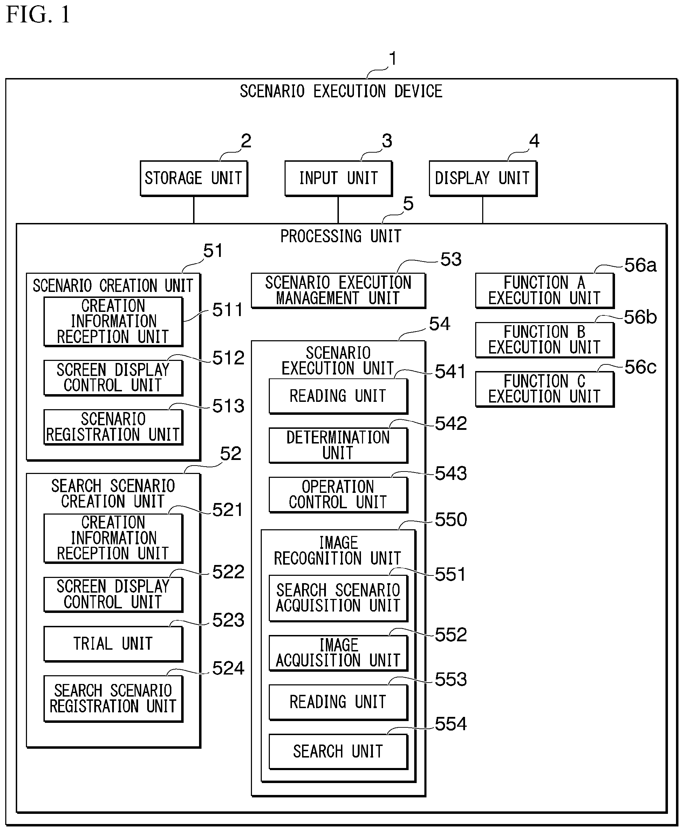

Fig. 1 is a functional block diagram showing a configuration of a scenario execution device 1 according to an embodiment of the present invention. The scenario execution device 1 is an example of an image processing device. In Fig. 1, only the functional blocks related to the present embodiment are extracted and shown. The scenario execution device 1 is an information processing device such as a PC and executes a robotic process automation (RPA) scenario. RPA is an example of an automation tool. The scenario execution device 1 includes a storage unit 2, an input unit 3, a display unit 4, and a processing unit 5.

The storage unit 2 stores a scenario file. In the scenario file, a scenario is described. The scenario shows processing modules and an order in which the processing modules will be executed. The processing module includes a user operation module and an image recognition module. The user operation module represents a user operation using a user interface. The object of the user operation is, for example, an application program (hereinafter also referred to as an application), an operation system (OS), or the like which is executed in the scenario execution device 1. The image recognition module represents the execution of an image recognition process of outputting information of coordinates of an area where an image matches a target image is displayed on a screen displayed by the display unit 4. The "target image" means an image of a search target. Also, the "image matches a target image" means an image similar or identical to the target image. An image of the screen displayed by the display unit 4 and an image to be searched for the image matching the target image will be referred to as "matching image". The coordinates output through the execution of the image recognition process represented by the image recognition module serve as a reference of a position where a user's operation is performed by a user operation module in the execution order after the image recognition module. Also, although an example in which the processing module other than the image recognition module is a user operation module will be described for simplicity in the present embodiment, the processing module other than the image recognition module may be a processing module having a function different from that of a user operation module such as a processing module for performing a determination process or a processing module for waiting for a predetermined time period.

The input unit 3 includes existing input devices such as a keyboard, a pointing device (a mouse, a tablet, or the like), a button, and a touch panel. The input unit 3 is a user interface operated by the user when an instruction of the user is input to the scenario execution device 1. The display unit 4 is an image display device such as a cathode ray tube (CRT) display, a liquid crystal display, or an organic electro luminescence (EL) display.

The processing unit 5 includes a scenario creation unit 51, a search scenario creation unit 52, a scenario execution management unit 53, a scenario execution unit 54, and a function X execution unit 56.

The scenario creation unit 51 includes a creation information reception unit 511, a screen display control unit 512, and a scenario registration unit 513. The creation information reception unit 511 receives information related to the creation of the scenario input by the user through the input unit 3. The screen display control unit 512 displays a scenario creation screen on the display unit 4. The scenario creation screen displays a list of processing modules capable of being used for scenario creation and information of processing modules for configuring the scenario being created and an execution order thereof. The scenario registration unit 513 generates a scenario file for describing a scenario created on the basis of the selection of the processing modules and the designation of an order selected and designated by a user using the scenario creation screen. Property information input by the user through the input unit 3 is added to the processing module. The property information represents setting content related to the processing module. The scenario registration unit 513 registers a scenario file in which the scenario created by the user is described in the storage unit 2.

The search scenario creation unit 52 creates a search scenario file for the image recognition module. The image recognition module searches for a matching image using a search scenario. The search scenario is a combination of one or more search processes of searching for the matching image using a search condition designated by the user. The search scenario is described in the search scenario file. In each of search process included in the search scenario, an image is searched according to search conditions using different features obtained from the target image. The search scenario creation unit 52 includes a creation information reception unit 521, a screen display control unit 522, a trial unit 523, and a search scenario registration unit 524.

The creation information reception unit 521 receives information related to the search scenario creation input by the user through the input unit 3. The screen display control unit 522 displays various types of screens used for creating the search scenario on the display unit 4. The trial unit 523 tries to perform the search process for use in the search scenario being created or the search scenario being created. The search scenario registration unit 524 generates a search scenario file that describes the search scenario created by the user and registers the generated search scenario file in the storage unit 2.

The scenario execution management unit 53 manages the execution of the scenario. The scenario execution management unit 53 may store a scenario execution schedule in the storage unit 2 in accordance with the instruction input by the user through the input unit 3. The scenario execution management unit 53 instructs the scenario execution unit 54 to execute the scenario in accordance with the stored execution schedule.

The scenario execution unit 54 includes a reading unit 541, a determination unit 542, an operation control unit 543, and an image recognition unit 550. The reading unit 541 reads the processing modules in the order of execution from the scenario file in which the scenario of the execution instruction issued by the scenario execution management unit 53 is described. The determination unit 542 determines whether the processing module read by the reading unit 541 is the user operation module or the image recognition module. When the determination unit 542 determines that the processing module is the user operation module, the operation control unit 543 controls the input unit 3 so that the operation of the user indicated by the user operation module is performed.

When the determination unit 542 determines that the processing module is the image recognition module, the image recognition unit 550 performs the image recognition process in accordance with the search scenario represented by the search scenario file of the image recognition module. The image recognition unit 550 includes a search scenario acquisition unit 551, an image acquisition unit 552, a reading unit 553, and a search unit 554. The search scenario acquisition unit 551 reads the search scenario file from the scenario file. Alternatively, the search scenario acquisition unit 551 reads a search scenario file of search scenario file identification information described in the scenario file from the storage unit 2. The search scenario file identification information is information for identifying the search scenario file. The image acquisition unit 552 acquires a matching image and a target image. The reading unit 553 reads the search process to be executed from the search scenario described in the search scenario file in the order of execution. The search unit 554 executes the search process read by the reading unit 553. The target of the search process is a matching image or an area within the matching image detected through another search process that has been executed, and a target is described in the search scenario.

The function X execution unit 56 executes the function X in accordance with an operation using the input unit 3. The function X can be used to execute a scenario and can be any function. The function X may be implemented by a central processing unit (CPU) executing the application program. For example, the function X can be any function implemented in a PC such as a spreadsheet function, a document editing function, a web browser function, a postcard creation function, or a graphic drawing function. In Fig. 1, the function X execution unit 56 (X=A, B, C) for executing the function X is described as a function A execution unit 56a, a function B execution unit 56b, and a function C execution unit 56c.

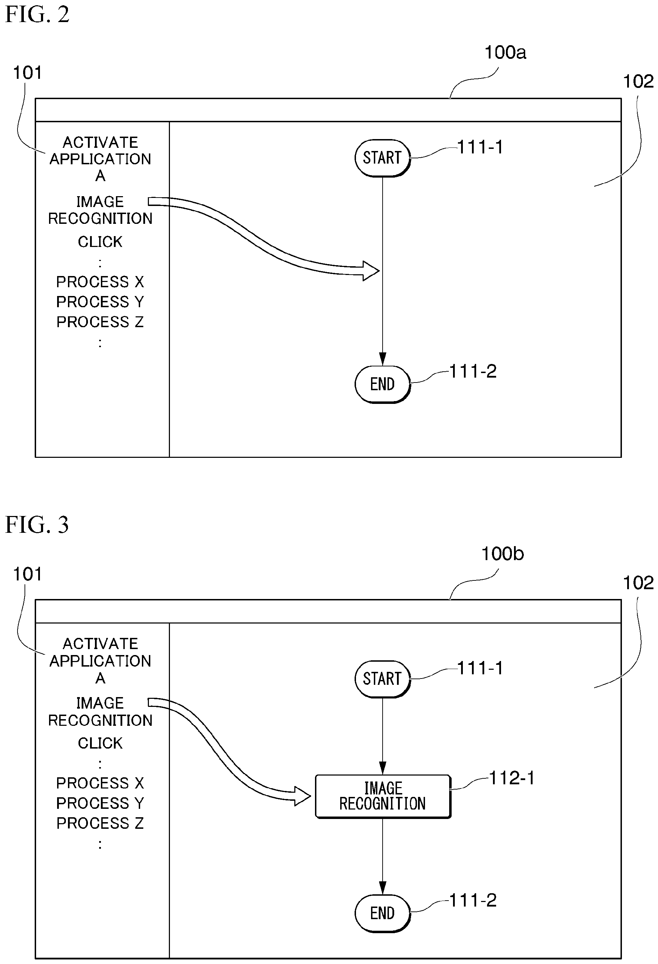

Figs. 2 to 4 are diagrams showing a display example of the scenario screen in the scenario execution device 1. The scenario creation screen 100a shown in Fig. 2 includes a library display area 101 and a scenario creation area 102. The library display area 101 is provided for displaying a list of available processing modules by module names. Also, the list of processing modules may be hierarchized in accordance with the functions of the processing modules. The module name means a name of the processing module. The list of processing modules includes the user operation module and the image recognition module. The scenario creation area 102 is provided for designating the order of execution of the processing modules.

The user selects a module name of a processing module to be added from the list of processing modules displayed in the library display area 101 through the input unit 3 such as a mouse. The processing module to be added will be referred to as an additional processing module. In Fig. 2, a case in which the additional processing module is the image recognition module is shown as an example. "Image recognition" is the module name of the image recognition module. The user drags (drags and drops) the selected additional processing module to the scenario creation area 102 with the mouse. The creation information reception unit 511 receives information of the selected additional processing module and information of the drag end position from the input unit 3. The screen display control unit 512 additionally displays a processing symbol for displaying the processing module name of the additional processing module at a drag end position. Thereby, the scenario creation screen 100b shown in Fig. 3 is displayed.

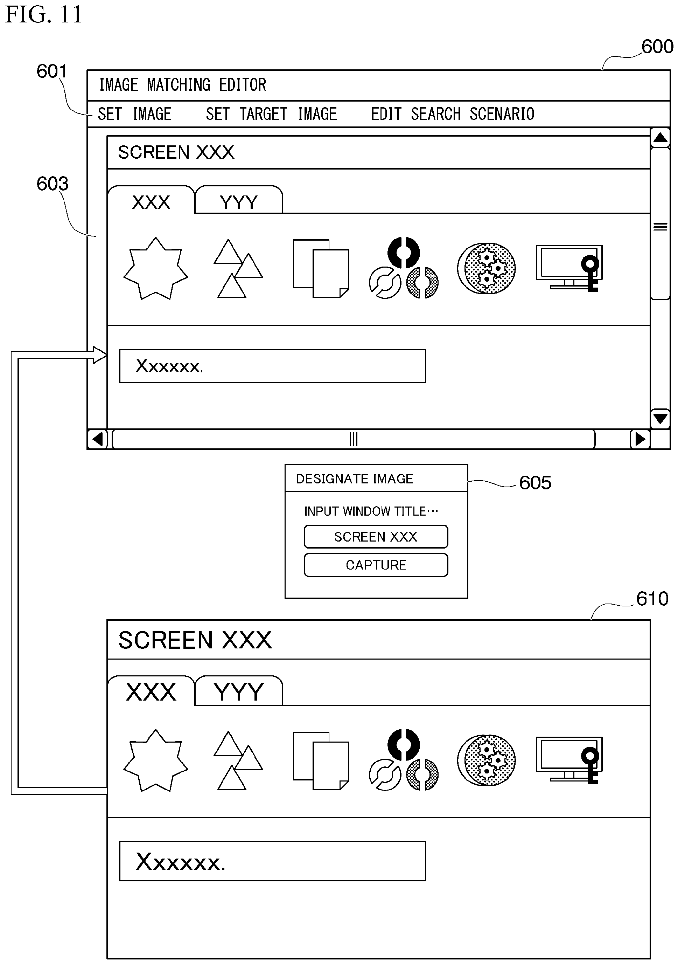

The screen display control unit 512 additionally displays a processing symbol 112-1 for displaying the module name of the additional processing module at the drag end position in the scenario creation area 102 of the scenario creation screen 100b shown in Fig. 3. The end position is between a node 111-1 representing the start of the scenario and a node 111-2 representing the end of the scenario. Likewise, a user-selected processing module can be added to the scenario. When the user has input a search scenario creation start instruction through the input unit 3, the scenario execution device 1 displays a screen for creating a search scenario. The screen for creating the search scenario will be described below with reference to Figs. 11 to 20.

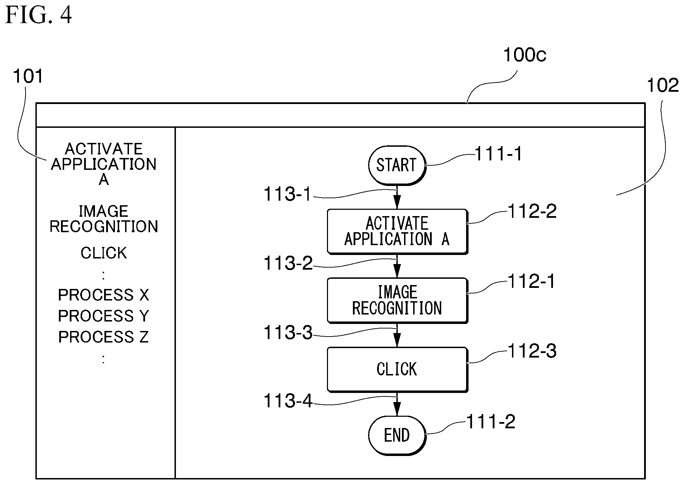

Fig. 4 shows a scenario creation screen 100c after the addition of the user operation module. In the scenario creation area 102 of the scenario creation screen 100c, rectangle processing symbols 112-2 and 112-3 in which the module name of the user operation module selected by the user through the input unit 3 is described are additionally displayed. Arrows 113-1 to 113-4 indicate the order of execution of the processing modules. The scenario of Fig. 4 shows that the processing modules represented by the processing symbols 112-2, 112-1, and 112-3 are sequentially executed in the order of the processing symbols 112-2, 112-1, and 112-3. When the user has instructed input of the property information of the processing symbol 112-2 or the processing symbol 112-3 through the input unit 3 such as a mouse or the like, the scenario execution device 1 displays the property information input screen. The user inputs the property information to the property information input screen through the input unit 3.

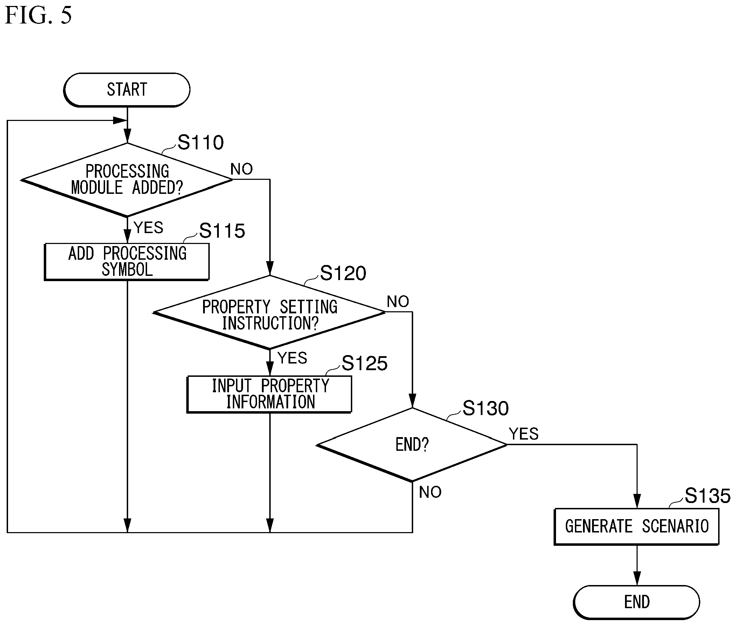

Fig. 5 is a flowchart showing a scenario creation process in the scenario execution device 1. The creation information reception unit 511 of the scenario execution device 1 determines whether or not the addition of the processing module has been input (step S110). For example, the user selects an additional processing module from the list of processing modules displayed in the library display area 101 of the scenario creation screen through the input unit 3 such as a mouse, and drags the selected additional processing module to the scenario creation area 102. In this case, the creation information reception unit 511 receives information of the selected additional processing module and information of the drag end position from the input unit 3 and determines that the addition of the processing module has been input (step S110: YES). The screen display control unit 512 additionally displays a processing symbol for displaying the processing module name of the additional processing module at the end position of the drag (step S115). The scenario creation unit 51 returns to the processing of step S110.

When the creation information reception unit 511 determines that the addition of the processing module has not been input in step S110 (step S110: NO), the creation information reception unit 511 determines whether or not a property setting instruction has been input (step S120). For example, the user double-clicks on the processing symbol representing the processing module of the property setting target through the input unit 3. The processing module of the property setting target will be referred to as a setting target processing module. The creation information reception unit 511 receives information of the processing symbol on which the property setting instruction has been operated through the input unit 3, and determines that the property setting instruction has been input (step S120: YES). The screen display control unit 512 displays the property input screen of the setting target processing module represented by the processing symbol for which the property setting instruction has been given. The user inputs set values of various types of variables for use in the property information of the setting target processing module to the property input screen (step S125). For example, if an operation module of a user operation of clicking a mouse button is disposed after the image recognition module, a value of a variable representing a relative position where a click is made on a display area detected by the image recognition module is set in the property information of the operation module. As a specific example, when the target image is an icon or a button, a center position of an area detected by the image recognition module is set as the value of the variable indicating the relative position where the click is made in the property information of the operation module representing the execution of the click. As another specific example, when the target image is displayed at a position at a predetermined distance from a button or an input field in an upward or left direction, a position at a predetermined distance from an area detected by the image recognition module in a downward or right direction is set as a value of a variable representing a relative position where the click is made. The creation information reception unit 511 stores the setting target processing module and property information including set values of various types of input variables in association. The scenario creation unit 51 returns to the processing of step S110.

When the creation information reception unit 511 determines that the property setting instruction has not been input in step S120 (step S120: NO), the creation information reception unit 511 determines whether or not the end of the scenario creation has been input (step S130). When the creation information reception unit 511 determines that the end of the scenario creation has not been input (step S130: NO), the creation information reception unit 511 returns to the processing of step S110. On the other hand, when the creation information reception unit 511 determines that the end of the scenario creation has been input (step S130: YES), the creation information reception unit 511 instructs the scenario registration unit 513 to perform the process. The scenario registration unit 513 generates a scenario file in which the created scenario has been described, stores the generated scenario file to the storage unit 2, and ends a scenario generation flow (step S135).

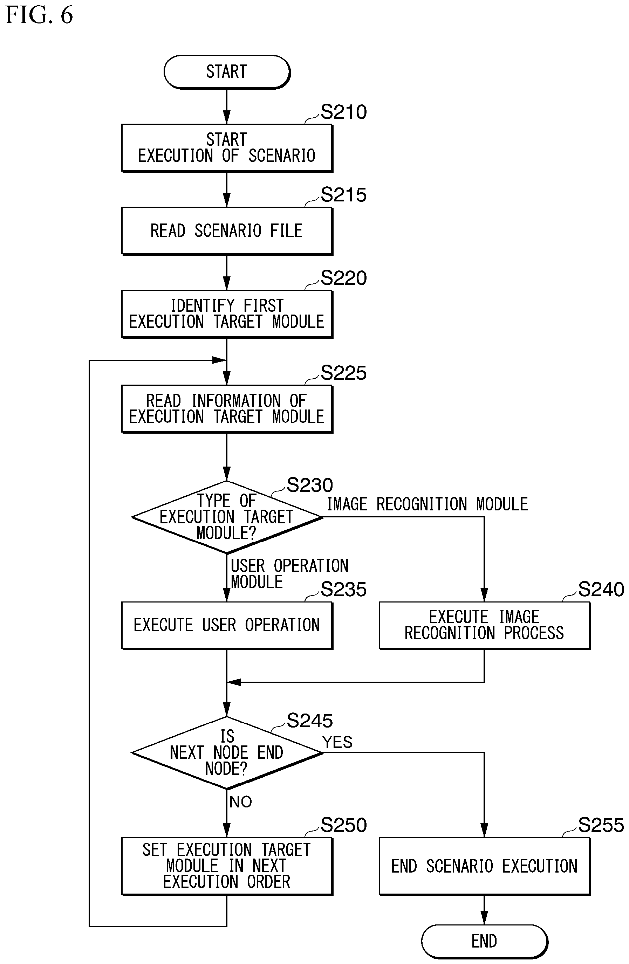

Fig. 6 is a flowchart showing a scenario execution process in the scenario execution device 1. The scenario execution management unit 53 of the scenario execution device 1 detects that information of an execution target scenario and an execution start has been input through the input unit 3 (step S210). Alternatively, the scenario execution management unit 53 detects that an execution timing of the execution target scenario represented by the execution schedule registered in advance has been reached. The reading unit 541 reads a scenario file in which the execution target scenario has been described from the storage unit 2 (step S215). The reading unit 541 sets a first processing module described in the scenario file as the execution target module (step S220).

The reading unit 541 reads information of the execution target module from the scenario file (step S225). The information of the execution target module includes a type of execution target module and property information of the execution target module. The determination unit 542 determines whether the type of execution target module is the user operation module or the image recognition module (step S230). When the determination unit 542 determines that the type of execution target module is the user operation module (step S230: user operation module), the determination unit 542 instructs the operation control unit 543 to perform the process. The operation control unit 543 controls the input unit 3 so that a user operation indicated by the execution target module is performed using the property information (step S235).

When the determination unit 542 determines that the type of execution target module is the image recognition module in step S230 (step S230: image recognition module), the image recognition unit 550 reads the search scenario file of the image recognition module. The image recognition unit 550 executes the image recognition process in accordance with the search scenario described in the search scenario file (step S240).

After step S235 or step S240, the reading unit 541 determines whether or not the node of the next execution order is an end node (step S245). When the reading unit 541 determines that the node of the next execution order is not the end node (step S245: NO), the processing module in the next execution order is set as a new execution target module (step S250), and the processing from step S225 is iterated. On the other hand, when the reading unit 541 determines that the node of the next execution order is the end node (step S245: YES), the reading unit 541 ends the execution of the scenario (step S255).

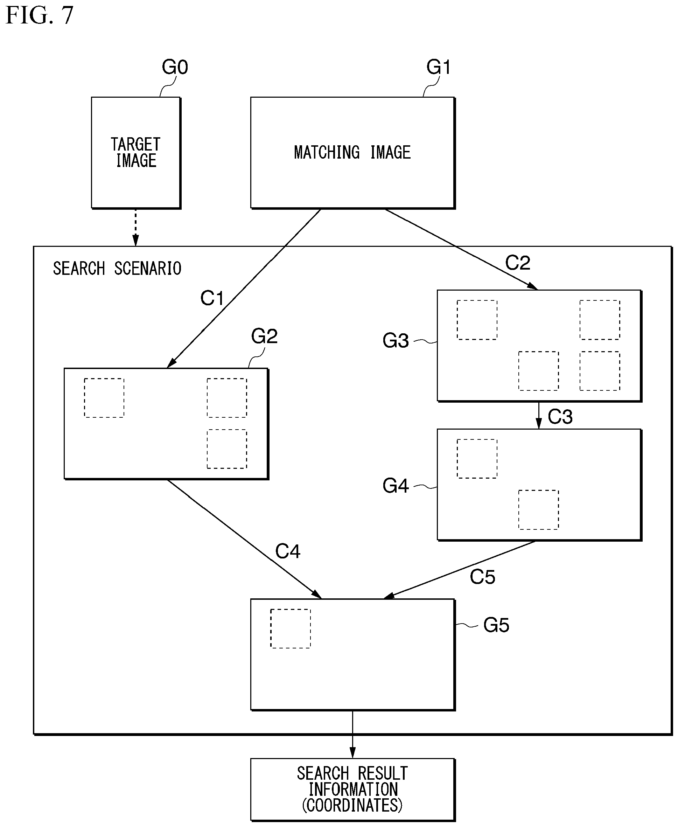

Next, image recognition using the image recognition module will be described. Fig. 7 is a diagram for describing an outline of the image recognition module. The image recognition module designates a process of detecting an area similar or identical to the target image from the matching image in accordance with the search scenario and outputting search result information representing coordinates of the detected area. The matching image is an image displayed on the screen of the display unit 4 and that in which an area where the image matches (similar or identical to) the target image is searched. In the present embodiment, the OS of the scenario execution device 1 is a multi-window system, and the matching image is an image of a window screen displayed on the display unit 4 by the application or the OS. Examples of the target image are an icon, a button, and a text input field serving as the object of the user operation. The target image may be an image that is not the object of the user operation. For example, when the object of the user operation is a button or a text input field, and there is an image at a certain position (at a predetermined distance in an upward direction, a lateral direction, or the like) from the button or the text input field which is the target of the user operation, the image may be set as the target image. When a certain image at a relative position from an icon, a button, a text input field, or the like which is the object of the user operation has been set as the target image, the position of the object of the user operation can be calculated using the target image and the relative position.

The search scenario is generated by combining one or more search processes based on a search condition using an image feature obtained from the target image. Therefore, the user decomposes the feature of the target image into simple features and uses the simple features as search conditions. A feature related to a color of the target image, a feature related to the shape of the target image, a feature that the target image is an attended area within the matching image, or a feature that a target image within the matching image is an image of an area where a color changes on the basis of the operation of the input unit 3 is used as the search condition. For example, it is assumed that the target image is an icon that includes a red circle and a blue square. The user sets conspicuous features of the target image such as a red, blue, round, square or color change when there is a cursor in display area as search conditions and generates a search scenario represented by a logical AND operation on the search conditions. The scenario execution device 1 searches for a matching image using the generated search scenario and detects an area that matches the target image. In this way, the scenario execution device 1 can detect the target image from the matching image using the search scenario in which the search is performed according to a procedure close to a method of human recognition.

For example, the search scenario shown in Fig. 7 is a combination of the following search processes. First, a search process on a matching image G1 is performed according to a search condition C1, and an output image G2 is obtained by extracting an area detected from the matching image G1. Also, a search process on the matching image G1 is performed according to a search condition C2, and an output image G3 is obtained by extracting an area detected from the matching image G1. Furthermore, a search process on the output image G3 is performed according to a search condition C3, and an output image G4 is obtained by extracting an area detected from the output image G3. An output image G5 of an area according to the logical AND operation on a result of performing the search process on the output image G2 according to a search condition C4 and a result of performing the search process on the output image G4 according to a search condition C5 is obtained. The coordinates of the area of the output image G5 are output as the final search result information. Features selected by the user among features obtained from the target image G0 are used in the search conditions C1 to C5.

The search scenario is described in the search scenario file of the image recognition module. The search scenario file includes matching image identification information, the target image or target image identification information, a search scenario, and a selection algorithm. The matching image identification information is information for identifying a window screen used as a matching image. When the search scenario file does not include matching image identification information, a window screen, that is active when the image recognition module is executed, can be used as the matching image. The target image identification information is information for identifying the target image.

The search scenario shows the order in which the search processes will be executed, the search conditions of each search process, and a method of combining the search processes. The search conditions include a type of search function and values of search parameters representing conditions when the search is performed according to the search function. The search parameters include information for identifying an input image and an output image name. The input image is a search target image and is a matching image or an output image obtained as a result of other search processing. The output image name is an image name of an output image representing a search result by the search process. The method of combining the search processes is, for example, a logical OR operation, a logical AND operation, a weighted addition operation, or the like. In the case of the weighted addition operation, the method of combining the search processes includes information of a weight given to each pixel within an area detected through each search process.

The selection algorithm indicates the selection between outputting coordinates of a detected area by the last search process as the execution result of the image recognition module, or outputting coordinates of an area having a highest score or an area having a score higher than a predetermined score as the execution result of the image recognition module on the basis of pixel-by-pixel scores of a matching image obtained through the last search process is shown. Alternatively, the selection algorithm may be a condition for selecting one or more areas from a plurality of detected areas obtained through the last search process or from a plurality of areas obtained on the basis of pixel-by-pixel scores of the matching image obtained through the last search process. For the selection condition, for example, information of a position of an area such as the top position or the leftmost position and information of a size of an area such as the largest area or the smallest area can be used. When the search processes are combined according to a logical AND operation or a logical OR operation and the coordinates of the detected area obtained through the last search process are output as the execution result of the image recognition module as they are, the selection algorithm may not be set.

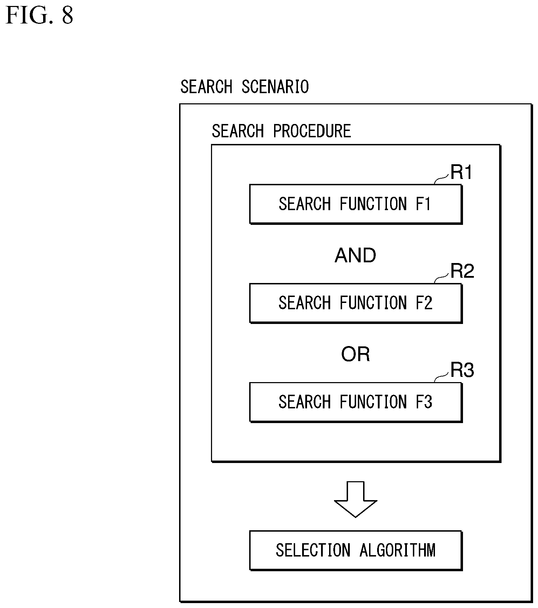

Fig. 8 is a diagram showing an example of a search scenario. The search scenario shown in Fig. 8 is represented by a search procedure and a selection algorithm. In the search procedure, the sequential execution of search processes R1, R2, and R3 using search functions F1, F2, and F3, respectively, as search conditions is described. Furthermore, the combination of the search process R1, the search process R2, and the search process R3 is described using the logical AND operation or the logical OR operation in the search procedure. The selection algorithm indicates which of the detected areas by the last search process R3 in the search procedure is to be selected.

Conventionally, a corresponding area has been searched for in the matching image according to a specific algorithm. In the present embodiment, the user sets a combination of features effective in searching for an area matching the target image within the matching image as a search condition. Thereby, the user creates an image recognition algorithm according to a recognition target as a search scenario. The search conditions for use in each search process that constitutes the search scenario include types of search functions used for the search. The types of search functions are shown below.
(1) Feature color search function: A feature color search function means a function of detecting an area where a specific color is used. When there is a target image in the matching image, the same color is used for those images. Therefore, the user designates a color considered to be a largest feature in the target image and uses the designated color as a search condition. The scenario execution device 1 detects a color indicated by the search condition from the matching image and detects a candidate for the display area of the target image. For example, this is effective when the target image is an icon image and a relatively conspicuous color is used in an icon of the target image with respect to a background in the matching image or another icon included in the matching image.
(2) Icon discrimination function: An icon discrimination function means a function of detecting an icon by changing an image according to the movement of the mouse. In the case of user interfaces (UIs) such as icons and buttons, a contour or a background color of the UI may change by moving the mouse. Therefore, the search condition is that the mouse is moved on the matching image and the image changes. This is effective when the target image is an icon or a button whose color or shape changes according to whether or not the cursor is on the display area.
(3) Rectangle detection function: A rectangle detection function means a function of detecting a quadrangle using contour extraction. The scenario execution device 1 extracts the contour from the matching image and approximates the contour with a polyline. When the polyline has four vertices (corners), the scenario execution device 1 detects the contour as a quadrangle. This is effective when the target image is a square UI such as a button.
(4) Circle detection function: A circle detection function means a function of detecting a circle within the matching image. The scenario execution device 1 detects a circle from the matching image according to the existing circle detection process. This is effective when the target image is a round icon or UI or when a circle is used in the target image.
(5) Circle fitting function: A circle fitting function means a function of estimating a circle using roundness threshold value processing with respect to an ellipse within a matching image obtained according to ellipse fitting. The scenario execution device 1 extracts a contour from the matching image and estimates ellipse parameters from contour coordinates. The scenario execution device 1 obtains the roundness from the estimated parameters of the ellipse. The scenario execution device 1 estimates an ellipse whose roundness is smaller than the threshold value as a circle. This is effective when the target image is not a perfect circle, but includes an image close to a circle. For example, it can be applied when an arc whose circumference is partially discontinuous like a crescent shape is used in the target image.
(6) Attended location extraction function: An attended location extraction function means a function of extracting an attended area within a matching image using a saliency map. The scenario execution device 1 obtains a saliency map of the matching image. The saliency map is obtained by quantifying an area to which a human visually pays attention within the image. The scenario execution device 1 obtains an attended area in the saliency map by automatically setting a threshold value according to a discriminant analysis method. For example, it is effective when an entire conspicuous icon or UI area is detected.
(7) Similar color histogram area search function: A similar color histogram area search function means a function of searching for an area similar to a target image in a matching image using a similarity of a color histogram. An area where there is a target image in the matching image has a high similarity of the color histogram associated with the target image. Therefore, the scenario execution device 1 searches for an area including the target image from the matching image using a feature of the color histogram of the target image as the search condition.

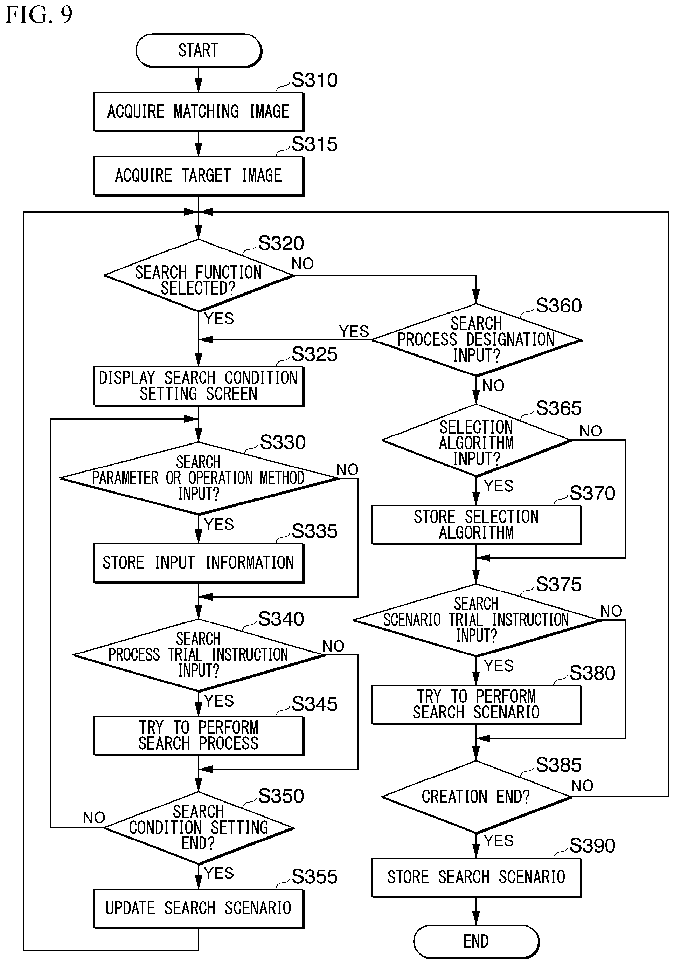

Fig. 9 is a flowchart showing a search scenario file creation process of the scenario execution device 1. The search scenario creation unit 52 of the scenario execution device 1 starts the search scenario creation process shown in Fig. 9 when a search scenario creation start instruction is input through the input unit 3.

First, the creation information reception unit 521 acquires matching image identification information input by the user through the input unit 3 (step S310). For example, the user designates a window screen by clicking on the window screen used as the matching image through the input unit 3. The creation information reception unit 521 acquires information of a title displayed on the designated window screen as the matching image identification information. Subsequently, the creation information reception unit 521 acquires a target image designated by the user through the input unit 3 (step S315). For example, a matching image may be incorporated in the function A execution unit 56a having an image editing function, and the user may designate a partial area serving as the target image from the matching image through the input unit 3. Alternatively, the user may input the image identification information stored in the storage unit 2 through the input unit 3. Note that when the target image is not used in the search scenario, the scenario execution device 1 does not have to perform the processing of step S315.

Subsequently, the creation information reception unit 521 determines whether or not the user has input a type of search function through the input unit 3 (step S320). For example, when a search process is added to a search scenario, the user inputs the type of search function for use in the search process through the input unit 3. The creation information reception unit 521 determines that the type of search function has been input (step S320: YES). The creation information reception unit 521 assigns an execution order to the search process to be added. In the case of the search process which is initially added, the creation information reception unit 521 sets the execution order to 1. Also, when n search processes (n is an integer greater than or equal to 1) have already been created, the creation information reception unit 521 sets the execution order to (n+1). Alternatively, when n search processes (n is an integer greater than or equal to 1) have already been created and the user has input the execution order j (j is an integer greater than or equal to 1 and less than or equal to n) of a creation target, the creation information reception unit 521 changes the execution order to (j+1) with respect to the created search process after the execution order j and sets the execution order of the search process to be added to j. The screen display control unit 522 displays a search condition setting screen. The search condition setting screen is a screen for inputting a value of a search parameter according to the search function and a method of combining with the results of the other search processes. Also, the search parameters used for the search functions shown in the above-described (1) to (7) will be described below. Also, hereinafter, a method of combining with the results of the other search processes is also described as an operation method.

The creation information reception unit 521 determines whether or not the user has input the value of the search parameter or the operation method through the input unit 3 (step S3 30). When the creation information reception unit 521 determines that the value of the search parameter or the operation method has been input (step S330: YES), the creation information reception unit 521 stores the input value of the search parameter or the operation method in association with the execution order of the search process and the type of search function (step S335). When the operation method is a logical OR operation or a logical AND operation, another search process to be combined is a search process in the immediately previous execution order or a search process in the execution order designated by the user. The other search process to be combined may be designated by the execution order or the output image name. Also, in the case that the search process in the immediately previous execution order is combined, the setting of the search process to be combined may be omitted. Also, when the operation method is a weighted addition operation, a weight value is also input.

When the creation information reception unit 521 determines that the set value of the search parameter and the operation method have not been input in step S330 (step S330: NO), the creation information reception unit 521 performs the processing of step S340 after the processing of step S335. That is, the creation information reception unit 521 determines whether or not the user has input a search process trial instruction through the input unit 3 (step S340). When the creation information reception unit 521 determines that the search process trial instruction has been input (step S340: YES), the creation information reception unit 521 instructs the trial unit 523 to try to perform the search process. The trial unit 523 performs a search process on an input image using the search condition indicated by the type of search function, the value of the search parameter, and the operation method stored in step S335(step S345). The screen display control unit 522 superimposes information of an area detected as a result of the search process performed by the trial unit 523 on a matching image and displays the information superimposed on the matching image on the display unit 4.

When the creation information reception unit 521 determines that the search process trial process has not been input in step S340 (step S340: NO) or after the processing of step S345, the creation information reception unit 521 performs the processing of step S350. That is, the creation information reception unit 521 determines whether or not the user has input an end of a search condition setting through the input unit 3 (step S350). When the creation information reception unit 521 determines that the user has not input the end of the search condition setting through the input unit 3 (step S350: NO), the creation information reception unit 521 performs the processing from step S330. For example, YES is determined in step S330 because a changed value of the search parameter or a changed operation method is input through the input unit 3 when a user has confirmed the result of the search process displayed in step S345 and a user-intended result has not been obtained.

On the other hand, the user confirms the result of the search process displayed in step S345 and the user-intended result has been obtained, the user inputs the end of the search process setting. The creation information reception unit 521 determines that the user has input the end of the search condition setting through the input unit 3 in step S350 (step S350: YES). The search scenario registration unit 524 adds the search process, in which the execution order of the search process, the search function, the value of the search parameter, and the operation method stored in step S330 are set, to the search scenario (step S355). The search scenario creation unit 52 performs the processing from step S320.

When the creation information reception unit 521 determines that the search function has not been input in step S320 (step S320: NO), the creation information reception unit 521 performs the processing of step S360. That is, the creation information reception unit 521 determines whether or not the user has performed an operation of designating the search process included in the search scenario as a modification target through the input unit 3 (step S360). When the creation information reception unit 521 determines that the user has performed an operation of designating any search process included in the search scenario as the modification target (step S360: YES), the creation information reception unit 521 notifies the screen display control unit 522 of the modification target search process. The screen display control unit 522 performs the processing of step S325 and displays the search condition setting screen. At this time, the screen display control unit 522 displays the value of each search parameter and the operation method set for the designated search process on the search condition setting screen by default. Subsequently, the search scenario creation unit 52 performs the processing from step S330. However, in step S355, the search scenario registration unit 524 changes the search conditions of the search process set in the search scenario by the value of the search parameter and the operation method modified for the designated search process.

When the creation information reception unit 521 determines that the user has not input the selection of the search process of the modification target in step S360 (step S360: NO), the creation information reception unit 521 performs the processing of step S365. That is, the creation information reception unit 521 determines whether or not the user has input a selection algorithm to be set in the search scenario through the input unit 3 (step S365). When it is determined that the user has input the selection algorithm through the input unit 3 (step S365: YES), the creation information reception unit 521 writes the input selection algorithm in the search scenario stored in the storage unit 2 (step S370).

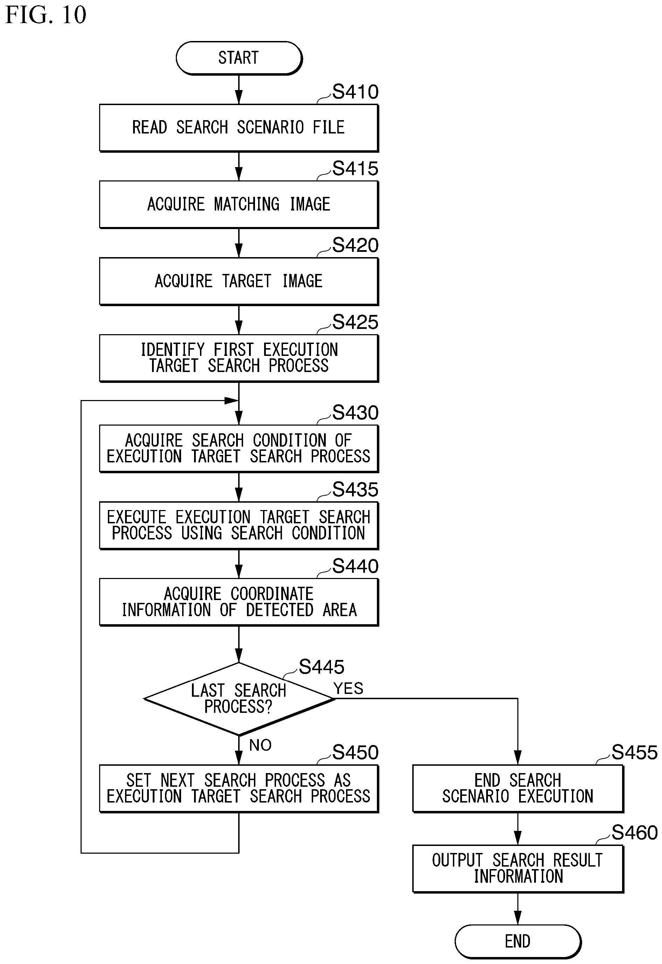

When the creation information reception unit 521 determines that the user has not input the selection algorithm in step S365 (step S365: NO) or after the processing of step S370, the creation information reception unit 521 performs the processing of step S375. That is, the creation information reception unit 521 determines whether or not the search scenario trial instruction has been input (step S375). For example, when a search scenario is generated by combining the search processes according to the processing of steps S320 to S370, the user inputs a search scenario trial instruction through the input unit 3. The creation information reception unit 521 determines that the search scenario trial instruction has been input in step S375 (step S375: YES) and instructs the trial unit 523 to try to perform the search scenario. The trial unit 523 reads the search scenario which has been created when the trial instruction is input from the storage unit 2. The trial unit 523 outputs the matching image, the target image, and the read search scenario to the image recognition unit 550 and issues a trial instruction to the image recognition unit 550. The image recognition unit 550 performs the processing of steps S425 to S460 of Fig. 10 to be described below and notifies the trial unit 523 of the result of executing the search scenario. Note that, the trial unit 523 may perform the processing of steps S425 to S460 in Fig. 10. The screen display control unit 522 displays search result information in which the detected area indicated by the execution result of the search scenario is superimposed on the matching image on the display unit 4 (step S380).

The creation information reception unit 521 performs the processing of step S385 when it is determined that the trial of the search scenario has not been input in step S375 (step S375: NO) or after the processing of step S380. That is, the creation information reception unit 521 determines whether or not the user has input an end of a search scenario creation through the input unit 3 (step S385). When it is determined that the end of the search scenario creation has not been input (step S385: NO), the creation information reception unit 521 performs the processing from step S320. For example, when the user confirms a search scenario trial result displayed in step S380 and the intended result is not obtained, the user adds the selection of the search function of the search process to be added to the search scenarios through the input unit 3. Thereby, the creation information reception unit 521 determines YES in step S320. Alternatively, the user inputs the designation of the target search process for modifying the parameter value or the operation method among the search processes included in the search scenario through the input unit 3. Thereby, the creation information reception unit 521 determines NO in step S320 and determines YES in step S360.

On the other hand, when the user confirms the search scenario trial result displayed in step S380 and the intended result has been obtained, the user inputs the end of the search scenario creation through the input unit 3. The creation information reception unit 521 determines that the user has input the end of the search scenario creation through the input unit 3 (step S385: YES). The search scenario registration unit 524 generates a search scenario file for the image recognition module and stores the generated search scenario file in the storage unit 2 (step S390). The search scenario file includes matching image identification information, a target image or target image identification information, and a search scenario (the execution order of each search process, the search condition, the operation method, and the selection algorithm).

In step S150 of Fig. 5, when the image recognition module is included in the scenario, the scenario registration unit 513 includes the search scenario file created by the process shown in Fig. 9 for the image recognition module in the scenario file or includes the search scenario file identification information of the search scenario file stored in the storage unit 2 in the scenario file. When the image recognition unit 550 executes the image recognition module which is the execution target module in step S240 of Fig. 6, the image recognition unit 550 reads the search scenario file generated with respect to the image recognition module from the scenario file, or the search scenario file represented by the search scenario file identification information described in the scenario file from the storage unit 2, and executes the search scenario file.

Fig. 10 is a flowchart showing the image recognition module execution process of the scenario execution device 1. The search scenario acquisition unit 551 reads the search scenario file of the image recognition module to be executed from the scenario file. Alternatively, the search scenario acquisition unit 551 reads the search scenario file represented by the search scenario file identification information described in the scenario file from the storage unit 2 (step S410).

The image acquisition unit 552 acquires a window screen represented by the matching image identification information set in the search scenario file as a matching image (step S415). Note that the image acquisition unit 552 may acquire a current active window screen image as the matching image without using the matching image identification information. Further, the image acquisition unit 552 acquires the target image included in the search scenario file or the target image of the target image identification information described in the search scenario file (step S420).

The reading unit 553 identifies the search process in the first execution order in the search scenario from the search scenario file (step S425). The identified search process is described as an execution target search process. The reading unit 553 reads a search condition and an operation method of the execution target search process from the search scenario (step S430). The search unit 554 acquires an input image set in the search condition. The search unit 554 executes an execution target search process using the search condition (step S435). That is, the search unit 554 executes the search process on the input image using a search function and a value of the search parameter set in the search condition. When the input image is a matching image, the entire matching image serves as a search target. When the input image is an output image of another search process, a detected area within the matching image represented by the output image serves as a search target.

The search unit 554 performs an operation according to the operation method on the area detected by performing the execution target search process and acquires coordinate information of the detected area (step S440). When the operation method is a logical AND operation or a logical OR operation associated with an output image of another search process, the logical OR operation or the logical AND operation on the area detected by the execution target search process in step S435 and the area indicated by the output image of the other search process are calculated, and the output image of the execution target search process is provided. When the operation method is a weighted addition operation, the search unit 554 adds the score given to each pixel within the area detected by performing the execution target search process to the score of each pixel respectively indicated by the output image of the other search process, and provides the score of each pixel as an output image. Note that the score given to each pixel within the detected area is a weight set in the operation method.

The reading unit 553 determines whether or not the current execution target search process is the last search process in the search scenario (step S445). When the reading unit 553 determines that the current execution target search process is not the last search process (step S445: NO), the reading unit 553 identifies the search process of the next execution order included in the search scenario and sets the identified search process as a new execution target search process (step S450). The image recognition unit 550 returns to the processing of step S430.

When the reading unit 553 determines that the current execution target search process is the last search process in step S445 (step S445: YES), the reading unit 553 ends the execution of the search scenario (step S455). The search unit 554 outputs search result information representing coordinates of the detected area obtained by the last search process or search result information representing coordinates of an area of pixels of a highest score on the basis of the selection algorithm set in the search scenario (step S460).

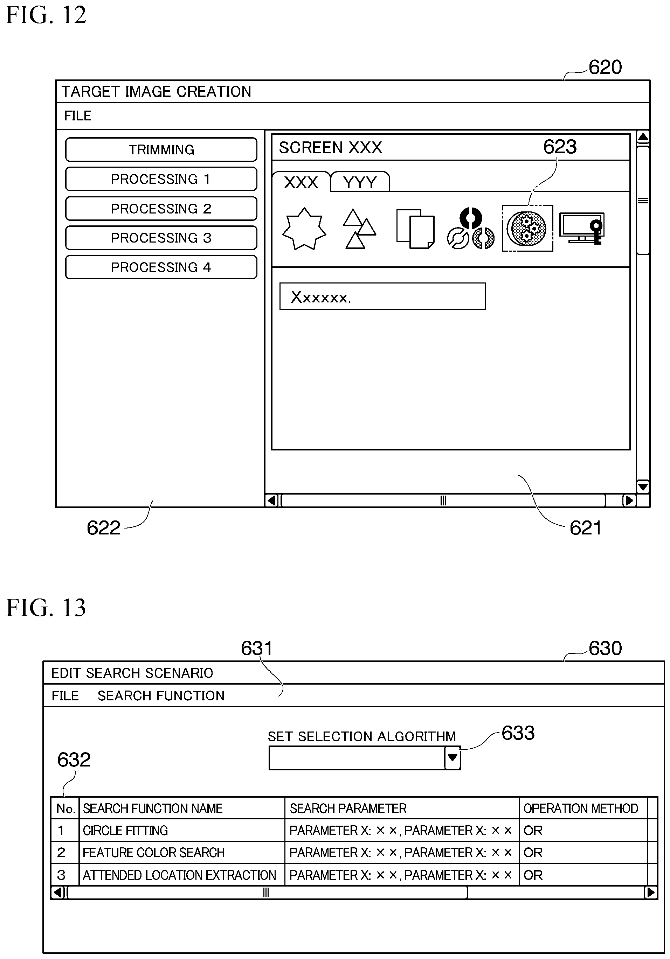

Subsequently, a display example of a screen for creating a search scenario to be displayed on the display unit 4 by the screen display control unit 522 will be described. Fig. 11 is a diagram showing a display example of an image matching editor screen 600. The image matching editor screen 600 includes a menu display area 601 and a matching image display area 603. When a matching image is set, the user selects an image setting from a menu displayed in the menu display area 601 through the input unit 3. The creation information reception unit 521 may display an image designation dialog 605 when the image setting is selected. When the user selects a window screen 610 through the input unit 3 and clicks on a capture button of the image designation dialog 605, the creation information reception unit 521 captures an image of the window screen 610. The screen display control unit 522 displays the captured image in the matching image display area 603. When a target image is set, the user selects the setting of the target image from the menu displayed in the menu display area 601 through the input unit 3. When the setting of the target image is selected, the creation information reception unit 521 may display the target image creation screen 620 shown in Fig. 12 to be described below. When a search scenario is created, the user selects editing of the search scenario from the menu displayed in the menu display area 601 through the input unit 3. When the editing of the search scenario is selected, the creation information reception unit 521 may display a search scenario editing screen 630 shown in Fig. 13 to be described below.

Fig. 12 is a diagram showing a display example of the target image creation screen 620 displayed when the matching image is processed to generate the target image. When the user has input the generation of the target image through the input unit 3, the screen display control unit 522 displays a target image creation screen 620 on the display unit 4. The target image creation screen 620 includes a display area 621 for displaying a matching image and a processing menu display area 622 for displaying an image processing method. The user selects the menu of the processing method displayed in the processing menu display area 622 through the input unit 3, processes the matching image displayed in the display area 621, and generates a target image. In Fig. 12, an area 623 of the matching image is segmented to generate the target image by inputting a trimming of the area 623 through the input unit 3.

Fig. 13 is a diagram showing a display example of the search scenario editing screen 630. The search scenario editing screen 630 includes a menu display area 631, a search procedure display area 632, and a pull-down menu 633. In the menu display area 631, a menu for selecting a search function is displayed. The feature color search function, the icon discrimination function, the rectangle detection function, the circle detection function, the circle fitting function, the attended location extraction function, and the similar color histogram area search function can be selected from the menu of the above search functions.

In the search procedure display area 632, the execution order (No.) of the search process, a search function name which is a name of the search function used in the search process, the search parameter, and the operation method are displayed. The value of the search parameter and the operation method are set through the search condition setting screen for each search function to be described below. The operation method shown in Fig. 13 shows that the logical AND operation (AND) or the logical OR operation (OR) associated with the output image of the search process in a previous execution order is calculated.

A menu for selecting the selection algorithm to be set in the search scenario is displayed in the pull-down menu 633. The user selects the selection algorithm to be set in the search scenario using the pull-down menu 633 from the start to the end of the creation of the search scenario.

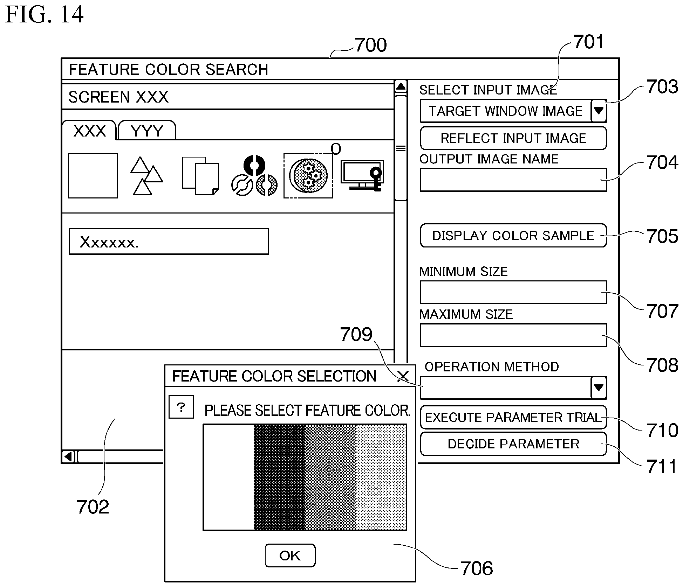

When the user selects the search function of the search process to be added from the menu of the menu display area 631 through the input unit 3, the image acquisition unit 552 displays the search condition setting screen of the selected search function (Figs. 14 to 20 described below) on the display unit 4. The user sets the value of the search parameter on the search condition setting screen and instructs the scenario execution device 1 to try to perform the search process using the set value through the input unit 3. The user adds the search processes one by one to the search scenario while confirming the search process trial result. Thereby, a search scenario in which one or more search processes are combined is finally created. After the user creates the search scenario, the user inputs the selection algorithm through the input unit 3.

Fig. 14 is a diagram showing a display example of the search condition setting screen 700 of the feature color search function. The search condition setting screen 700 includes a parameter value input area 701 and a search result display area 702. In the parameter value input area 701, search parameters and operation methods are set. The search parameters are an input image, an output image name, a feature color, a minimum size, and a maximum size. The parameter value input area 701 includes a pull-down menu 703, an input field 704, a color sample display button 705, an input field 707, an input field 708, an operation method selection pull-down menu 709, a trial button 710, and a decision button 711.

In the pull-down menu 703, an image serving as an input image is selected from a list including the matching image and the output image names of other search processes. The output image name is input to the input field 704. When the user clicks on the color sample display button 705 through the input unit 3, the screen display control unit 522 displays the feature color selection dialog 706. The screen display control unit 522 displays the color used in the target image as a color sample in the feature color selection dialog 706. The user selects a feature color for use in the search by clicking on a feature color from the color samples displayed in the feature color selection dialog 706 through the input unit 3. The minimum size and the maximum size are input to the input fields 707 and 708, respectively. The minimum size is used to exclude a detected area from the detected rectangle candidates when a size of the detected area matching the feature color is smaller than a value of the minimum size. The maximum size is used to exclude a detected area from the detected rectangle candidates when a size of the detected area matching the feature color is larger than a value of the maximum size.

In the operation method selection pull-down menu 709, any one operation method is selected from the logical OR operation, the logical AND operation, and the weighted addition operation. The logical OR operation and the logical AND operation are a logical OR operation and a logical AND operation associated with the detected area of the search process in the previous execution order, respectively. The trial button 710 is used to issue an instruction for a trial of the search process using the value of the search parameter currently set in the parameter value input area 701. In the search result display area 702, the result of the search process executed by clicking on the trial button 710 is drawn. In Fig. 14, information of the detected area obtained as a result of the search process is superimposed and displayed on the matching image. Furthermore, in the detected area, a rectangle representing the detected area and a number assigned to the detected area are displayed. The numbers may be assigned, for example, in descending order of degrees of color matching. The user confirms the result of the search process displayed in the search result display area 702 and changes the value of the search parameter as necessary. The decision button 711 is used to set the value of each search parameter to the value currently set in the parameter value input area 701 and to issue an instruction to end the search condition setting.

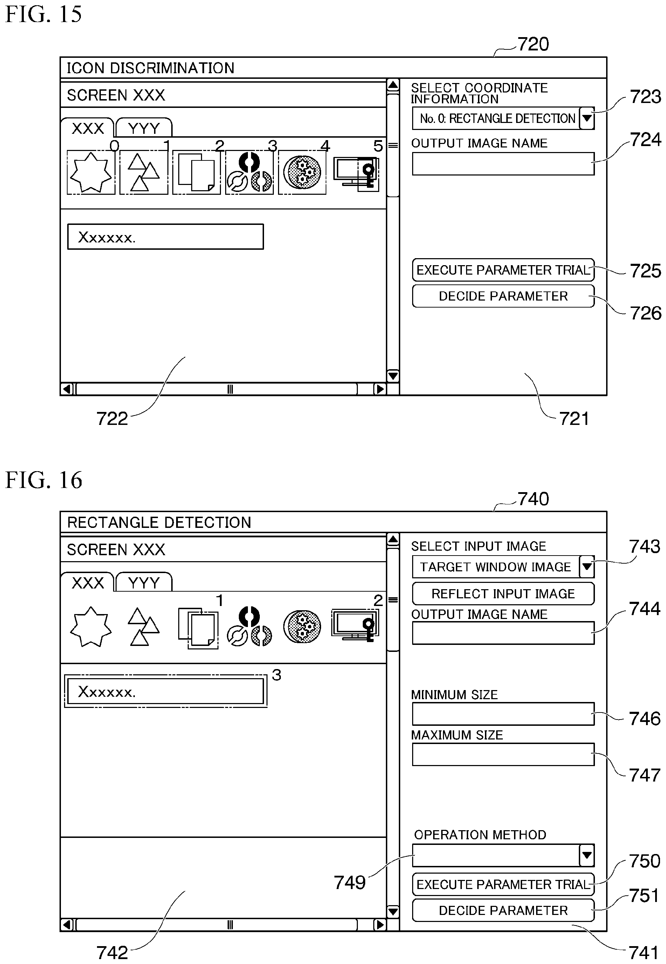

Fig. 15 is a diagram showing a display example of the search condition setting screen 720 of the icon discrimination function. The search condition setting screen 720 includes a parameter value input area 721 and a search result display area 722. Search parameters are set in the parameter value input area 721. The search parameters are coordinate information (an input image) and an output image name of the area serving as the search target.

The parameter value input area 721 includes a pull-down menu 723, an input field 724, a trial button 725, and a decision button 726. In the pull-down menu 723, an output image of a search process by which a pointer (a cursor of a mouse) is disposed in the detected area represented is selected from the list of output image names of other search processes. That is, one of the search processes set in the search scenario associated with a detection area to be used as coordinate information for disposing the cursor of the mouse is selected when the search is performed according to the icon discrimination function. The output image name is input to the input field 724. The selected image corresponds to the input image.

The trial button 725 is used to issue an instruction for a trial of the search process using the value of the search parameter currently set in the parameter value input area 721. The search result display area 722 draws the result of the search process executed by clicking on the trial button 725. In Fig. 15, the information of the detected area obtained as a result of the search process is superimposed and displayed on the matching image. Furthermore, a rectangle indicating the detected area and a number assigned to the detected area are displayed in the detected area. The decision button 726 is used to set the value of the search parameter to a value currently set in the parameter value input area 721 and to issue an instruction to end the search condition setting.

Fig. 16 is a diagram showing a display example of the search condition setting screen 740 of the rectangle detection function. The search condition setting screen 740 includes a parameter value input area 741 and a search result display area 742. In the parameter value input area 741, the search parameters and the operation method are set. The search parameters are an input image, an output image name, a minimum size, and a maximum size. The parameter value input area 741 includes a pull-down menu 743, an input field 744, input fields 746 and 747, an operation method selection pull-down menu 749, a trial button 750, and a decision button 751.

In the pull-down menu 743, an image serving as the input image is selected from a list including the matching image and the output image names of other search processes. The output image name is input to the input field 744. The minimum size and the maximum size are set in the input fields 746 and 747, respectively. The minimum size is used to exclude a detected rectangle from the detected rectangle candidates when a size of the detected rectangle is smaller than a value of the minimum size. The maximum size is used to exclude a detected rectangle from the detected rectangle candidates when a size of the detected rectangle is larger than a value of the maximum size.

In the operation method selection pull-down menu 749, any one operation method is selected from the logical OR operation, the logical AND operation, and the weighted addition operation. The logical OR operation and the logical AND operation are a logical OR operation and a logical AND operation associated with the detected area of the search process in the previous execution order, respectively. The trial button 750 is used to issue an instruction for a trial of the search process using the value of the search parameter currently set in the parameter value input area 741. In the search result display area 742, the result of the search process executed by clicking on the trial button 750 is drawn. In Fig. 16, information of the detected area obtained as a result of the search process is superimposed and displayed on the matching image. Furthermore, in the detected area, a rectangle representing the detected area and a number assigned to the detected area are displayed. The decision button 751 is used to set the value of each search parameter to the value currently set in the parameter value input area 741 and to issue an instruction to end the search condition setting.

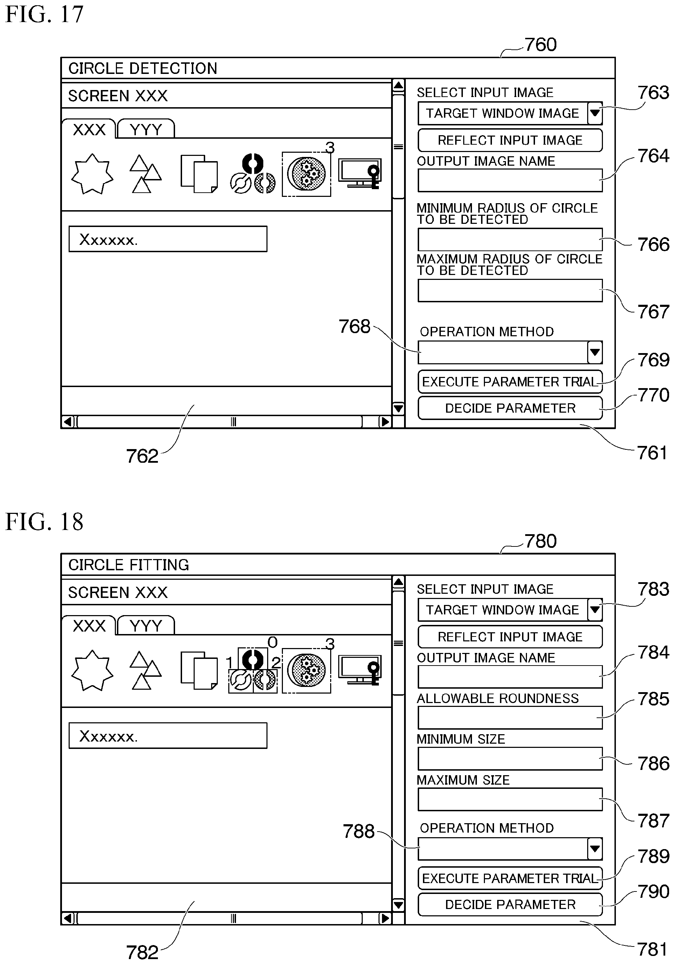

Fig. 17 is a diagram showing a display example of the search condition setting screen 760 of the circle detection function. The search condition setting screen 760 includes a parameter value input area 761 and a search result display area 762. In the parameter value input area 761, search parameters and operation methods are set. The search parameters are values of an input image, an output image name, a minimum radius of a circle to be detected, and a maximum radius of a circle to be detected. The parameter value input area 761 includes a pull-down menu 763, an input field 764, input fields 766 and 767, an operation method selection pull-down menu 768, a trial button 769, and a decision button 770.

In the pull-down menu 763, an image serving as the input image is selected from a list including the matching image and the output image names of other search processes. The output image name is input to the input field 764. The values of the minimum radius of the circle to be detected and the maximum radius of the circle to be detected are input to the input fields 766 and 767, respectively. The minimum radius of the circle to be detected is used to exclude a detected circle from the circle of the detection result of the search process when the radius of the detected circle is smaller than a value of the minimum radius. The maximum radius of the circle to be detected is used to exclude a detected circle from the circle of the detection result of the search process when the radius of the detected circle is larger than a value of the maximum radius.

In the operation method selection pull-down menu 768, any one operation method is selected from the logical OR operation, the logical AND operation, and the weighted addition operation. The logical OR operation and the logical AND operation are a logical OR operation and a logical AND operation associated with the detected area of the search process in the previous execution order, respectively. The trial button 769 is used to issue an instruction for a trial of the search process using the value of the search parameter currently set in the parameter value input area 761. In the search result display area 762, the result of the search process executed by clicking on the trial button 769 is drawn. In Fig. 17, information of the area obtained as a search result is superimposed and displayed on the matching image. Furthermore, in the detected area, a rectangle representing the detected area and a number assigned to the detected area are displayed. The user confirms a result of the search process displayed in the search result display area 762 and changes a value of the search parameter as necessary. The decision button 770 is used to set the value of each search parameter to the value currently set in the parameter value input area 761 and to issue an instruction to end the search condition setting.

Fig. 18 is a diagram showing a display example of the search condition setting screen 780 of the circle fitting function. The search condition setting screen 780 includes a parameter value input area 781 and a search result display area 782. In the parameter value input area 781, search parameters and operation methods are set. The search parameters are values of an input image, an output image name, allowable roundness, a minimum size, and a maximum size. The parameter value input area 781 includes a pull-down menu 783, input fields 784 to 787, an operation method selection pull-down menu 788, a trial button 789, and a decision button 790.

In the pull-down menu 783, an image serving as the input image is selected from a list including the matching image and the output image names of other search processes. The output image name is input to the input field 784. The allowable roundness, the minimum radius of the circle to be detected, and the maximum radius of the circle to be detected are input to the input fields 784 to 787, respectively. The allowable roundness is used to exclude an ellipse from the circle detection results when the estimated roundness of the ellipse is greater than a value of the allowable roundness. The minimum size is used to exclude a detected ellipse from circle detection results when a size of a rectangle tangent to the detected ellipse is smaller than a value of the minimum size. The maximum size is used to exclude a detected ellipse from the circle detection results when the size of the rectangle tangent to the detected ellipse is larger than a value of the maximum size.

In the operation method selection pull-down menu 788, any one operation method is selected from the logical OR operation, the logical AND operation, and the weighted addition operation. The logical OR operation and the logical AND operation are a logical OR operation and a logical AND operation associated with the detected area of the search process in the previous execution order, respectively. The trial button 789 is used to issue an instruction for a trial of the search process using the value of the search parameter currently set in the parameter value input area 781. In the search result display area 782, the result of the search process executed by clicking on the trial button 789 is drawn. In Fig. 18, information of the detected area obtained as a result of the search process is superimposed and displayed on the matching image. Furthermore, a rectangle representing the detected area and a number assigned to the detected area are displayed in the detected area. The user confirms a result of the search process displayed in the search result display area 782 and changes a value of the search parameter as necessary. The decision button 790 is used to set the value of each search parameter to the value currently set in the parameter value input area 781 and to issue an instruction to end the search condition setting.

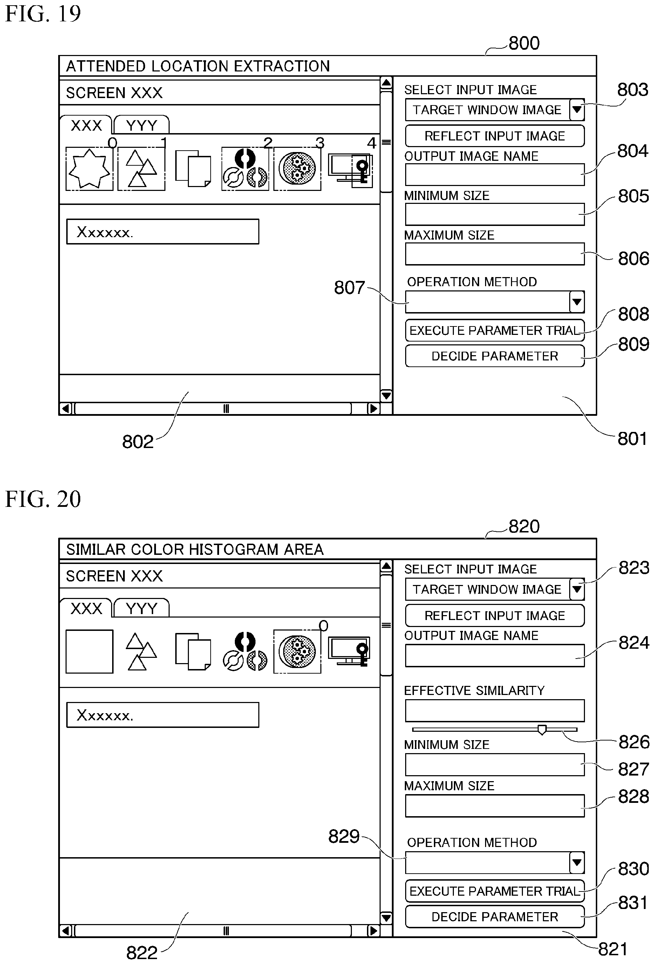

Fig. 19 is a diagram showing a display example of the search condition setting screen 800 for the search process using the attended location extraction function. The search condition setting screen 800 includes a parameter value input area 801 and a search result display area 802. In the parameter value input area 801, search parameters and operation methods are set. The search parameters are an input image, an output image name, a minimum size, and a maximum size. The parameter value input area 801 includes a pull-down menu 803, input fields 804 to 806, an operation method selection pull-down menu 807, a trial button 808, and a decision button 809.

In the pull-down menu 803, an image serving as the input image is selected from a list including the matching image and the output image names of other search processes. The output image name is input to the input field 804. The minimum size and the maximum size are input to the input fields 805 and 806, respectively. The minimum size is used to exclude a detected rectangle from the detected rectangle candidates when a size of the detected rectangle is smaller than a value of the minimum size. The maximum size is used to exclude a detected rectangle from the detected rectangle candidates when a size of the detected rectangle is larger than a value of the maximum size.

In the operation method selection pull-down menu 807, any one operation method is selected from the logical OR operation, the logical AND operation, and the weighted addition operation. The logical OR operation and the logical AND operation are a logical OR operation and a logical AND operation associated with the detected area of the search process in the previous execution order, respectively. The trial button 808 is used to issue an instruction for a trial of the search process using the value of the search parameter currently set in the parameter value input area 801. In the search result display area 802, the result of the search process executed by clicking on the trial button 808 is drawn. In Fig. 19, information of the detected area obtained as a result of the search process is superimposed and displayed on the matching image. Furthermore, a rectangle representing the detected area and a number assigned to the detected area are displayed in the detected area. For example, the numbers can be arranged in descending order of scores in the saliency map. The user confirms a result of the search process displayed in the search result display area 802 and changes a value of the search parameter as necessary. The decision button 809 is used to set the value of each search parameter to the value currently set in the parameter value input area 801 and to issue an instruction to end the search condition setting.

Fig. 20 is a diagram showing a display example of the search condition setting screen 820 of the similar color histogram area search function. The search condition setting screen 820 includes a parameter value input area 821 and a search result display area 822. In the parameter value input area 821, search parameters and operation methods are set. The search parameters are an input image, an output image name, an effective similarity, a minimum size, and a maximum size. The parameter value input area 821 includes a pull-down menu 823, an input field 824, a slide bar 826, an input field 827, an input field 828, an operation method selection pull-down menu 829, a trial button 830, and a decision button 831.

In the pull-down menu 823, an image serving as the input image is selected from a list including the matching image and the output image names of other search processes. The output image name is input to the input field 824. The number of steps is input to the input field 825. The effective similarity is set by the slide bar 826. The effective similarity is set from a maximum similarity of the histogram to a determined percentage of a similarity of a similar area. The effective similarity is set by the slide bar. The minimum size and the maximum size are set in the input fields 827 and 828, respectively. The minimum size is used to exclude a detected rectangle from the detected rectangle candidates when a size of the detected rectangle is smaller than a value of the minimum size. The maximum size is used to exclude a detected rectangle from the detected rectangle candidates when a size of the detected rectangle is larger than a value of the maximum size.

In the operation method selection pull-down menu 829, any one operation method is selected from the logical OR operation, the logical AND operation, and the weighted addition operation. The logical OR operation and the logical AND operation are a logical OR operation and a logical AND operation associated with the detected area of the search process in the previous execution order, respectively. The trial button 830 is used to issue an instruction for a trial of the search process using the value of the search parameter currently set in the parameter value input area 821. In the search result display area 822, the result of the search process executed by clicking on the trial button 830 is drawn. In Fig. 20, information of a detected area obtained as a result of the search process is superimposed and displayed on the matching image. Furthermore, in the detected area, a rectangle representing the detected area and a number assigned to the detected area are displayed. The user confirms a result of the search process displayed in the search result display area 822 and changes a value of the search parameter as necessary. The decision button 831 is used to set the value of each search parameter to the value currently set in the parameter value input area 821 and to issue an instruction to end the search condition setting.

Next, the search process of each search function executed by the scenario execution device 1 will be described. Although an example in which the search unit 554 performs the search process will be described below, a similar operation is performed even if the trial unit 523 tries to perform the search process.

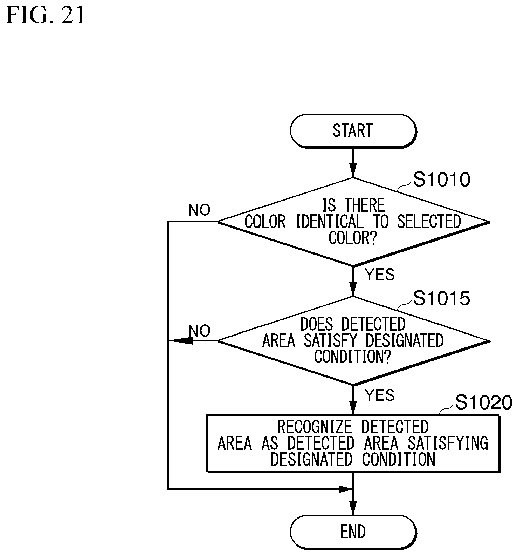

Fig. 21 is a flowchart showing a search process using the feature color search function of the scenario execution device 1. The reading unit 553 acquires a value of the search parameter of a feature color search function set by the search condition setting screen 700 shown in Fig. 14. Search parameters are an input image, an output image name, a feature color, a minimum size, and a maximum size. The search unit 554 determines whether or not there is feature color indicated by the search parameter, i.e., there is a pixel of a color identical to a user-selected color, in the input image (step S1010). When the search unit 554 determines that there is no pixel of a color matching the user-selected color (step S1010: NO), the search unit 554 ends the process. When the search unit 554 determines that there is a pixel of a color matching the user-selected color (step S1010: YES), the search unit 554 determines whether or not a detected area including a detected pixel satisfies a designated condition (step S1015). The designated condition is a condition in which the size of the detected area is larger than or equal to the minimum size and less than or equal to the maximum size. When the search unit 554 determines that the detected area does not satisfy the designated condition (step S1015: NO), the search unit 554 ends the process. When the search unit 554 determines that the detected area satisfies the designated condition (step S1015: YES), the search unit 554 recognizes the detected area as a detected area satisfying the search condition (step S1020).

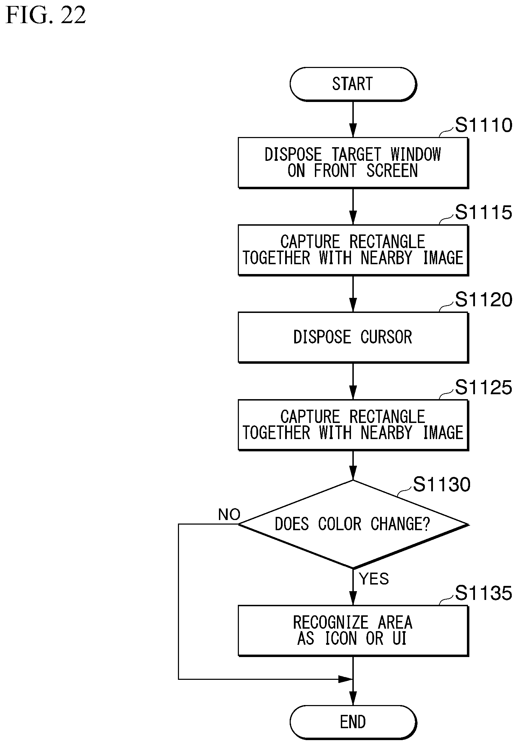

Fig. 22 is a flowchart showing a search process using the icon discrimination function of the scenario execution device 1. The reading unit 553 acquires matching image identification information and values of search parameters of the icon discrimination function set by the search condition setting screen 720 shown in Fig. 15 from the search scenario file. The search parameters are an input image and an output image name. The search unit 554 sets a window screen represented by the matching image identification information as a target window. The search unit 554 disposes the target window on a front screen (step S1110). The search unit 554 acquires coordinates of a detected area represented by an input screen and calculates coordinates of a rectangle including the acquired detected area. The search unit 554 captures an image including a rectangle of a position of the calculated coordinates together with a nearby image from the target window disposed on the front screen (step S1115). Next, the search unit 554 controls the input unit 3 so that the cursor is disposed at the position of the captured rectangle of the target window (step S1120). The search unit 554 captures an area that is the same as that in step S1115 from the target window (step S1125). The search unit 554 compares the image captured in step S1115 with the image captured in step S1125 and determines whether or not the color has changed (step S1130). When the search unit 554 determines that the color has not changed (step S1130: NO), the search unit 554 determines that the captured area is not an icon or a UI and ends the process. On the other hand, when the search unit 554 determines that the color has changed (step S1130: YES), the search unit 554 recognizes that the captured area is an icon or a UI (step S1135).

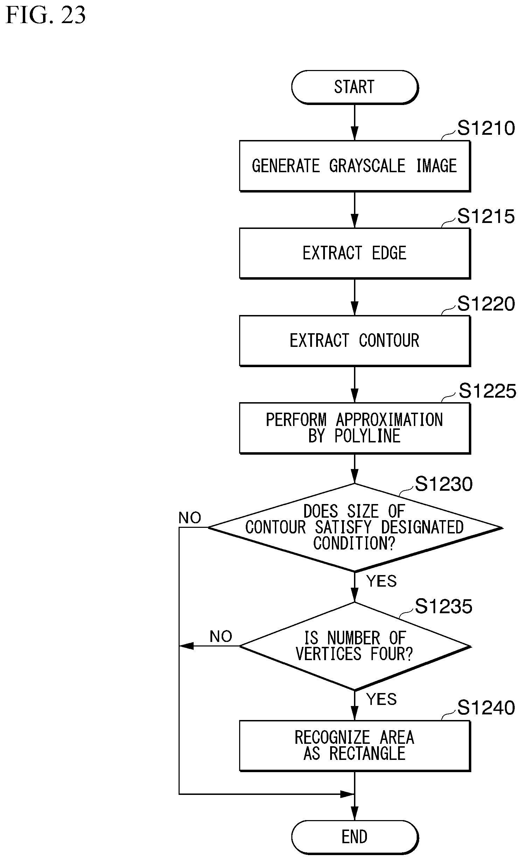

Fig. 23 is a flowchart showing a search process using the rectangle detection function of the scenario execution device 1. The reading unit 553 acquires values of search parameters of the rectangle detection function set by the search condition setting screen 740 shown in Fig. 16. The search parameters are an input image, an output image name, a minimum size, and a maximum size. The search unit 554 converts the input image into a grayscale image (step S1210) and then extracts an edge within the input image converted into the grayscale image (step S1215). The search unit 554 extracts a contour using the extracted edge (step S1220) and approximates the extracted contour by a polyline (step S1225).

The search unit 554 determines whether or not the size of the contour approximated by the polyline satisfies the designated condition (step S1230). The designated condition is that the size of the area is greater than or equal to the minimum size indicated by the search parameter and less than or equal to the maximum size indicated by the search parameter. When the search unit 554 determines that the designated condition is not satisfied (step S1230: NO), the search unit 554 ends the process. When the search unit 554 determines that the designated condition is satisfied (step S1230: YES), the search unit 554 determines whether or not the number of vertices of the contour approximated by the polyline is four (step S1235). When the search unit 554 determines that the number of vertices of the contour is not four (step S1235: NO), the search unit 554 ends the process. When the search unit 554 determines that the number of vertices of the contour is four (step S1235: YES), the search unit 554 recognizes an area of the contour approximated by the polyline as a rectangle detected by the search process (step S1240).

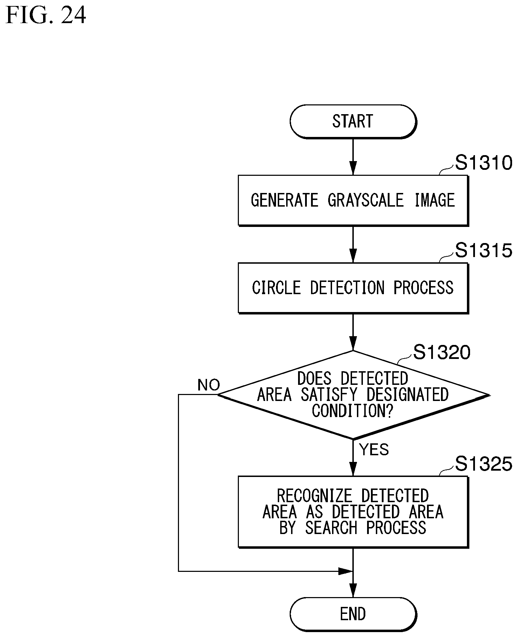

Fig. 24 is a flowchart showing a search process using the circle detection function of the scenario execution device 1. The reading unit 553 acquires values of search parameters of the circle detection function set by the search condition setting screen 760 shown in Fig. 17. The search parameters are values of an input image, an output image name, a minimum radius of a circle to be detected, and a maximum radius of a circle to be detected. The search unit 554 converts the input image into a grayscale image (step S1310) and then detects the circle by estimating the parameters of the circle (step S1315). The reading unit 553 determines whether or not an area of the detected circle satisfies the designated condition (step S1320). The designated condition is a condition in which a radius of the detected circle area is greater than or equal to the minimum radius and less than or equal to the maximum radius of the circle indicated by the search parameter. When the search unit 554 determines that the designated condition is not satisfied (step S1320: NO), the search unit 554 ends the process. When the search unit 554 determines that the designated condition is satisfied (step S1320: YES), the search unit 554 recognizes the area of the detected circle as the circle detected by the search process (step S1325).

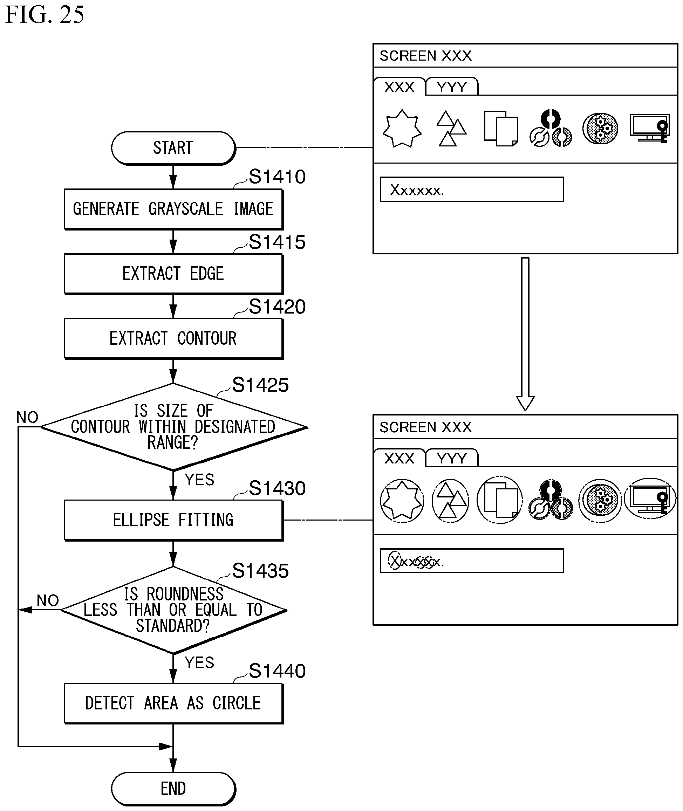

Fig. 25 is a flowchart showing a search process using the circle fitting function of the scenario execution device 1. The reading unit 553 acquires values of search parameters of the circle fitting function set by the search condition setting screen 780 shown in Fig. 18. The search parameters are values of an input image, an output image name, allowable roundness, a minimum size, and a maximum size. The search unit 554 converts the input image into a grayscale image (step S1410) and then extracts an edge within the input image converted into the grayscale image (step S1415). The search unit 554 extracts a contour using the extracted edge (step S1420). The search unit 554 determines whether or not a size of the extracted contour is within a designated range (step S1425). The designated range is a range greater than or equal to the minimum size indicated by the search parameter and less than or equal to the maximum size indicated by the search parameter. When the search unit 554 determines that the range is not within the designated range (step S1425: NO), the search unit 554 ends the process. When the search unit 554 determines that the range is within the designated range (step S1425: YES), the search unit 554 performs ellipse fitting on the contour having a size within the designated range (step S1430). The search unit 554 determines whether or not the roundness of the ellipse estimated by the ellipse fitting is less than or equal to a standard indicated by the roundness indicated by the search parameter (step S1435). When the search unit 554 determines that the roundness does not satisfy the standard (step S1435: NO), the search unit 554 ends the process. The search unit 554 recognizes an area whose roundness is less than or equal to the standard within the ellipse-fitted area (step S1435: YES) as a circle detected by the search process (step S1440).

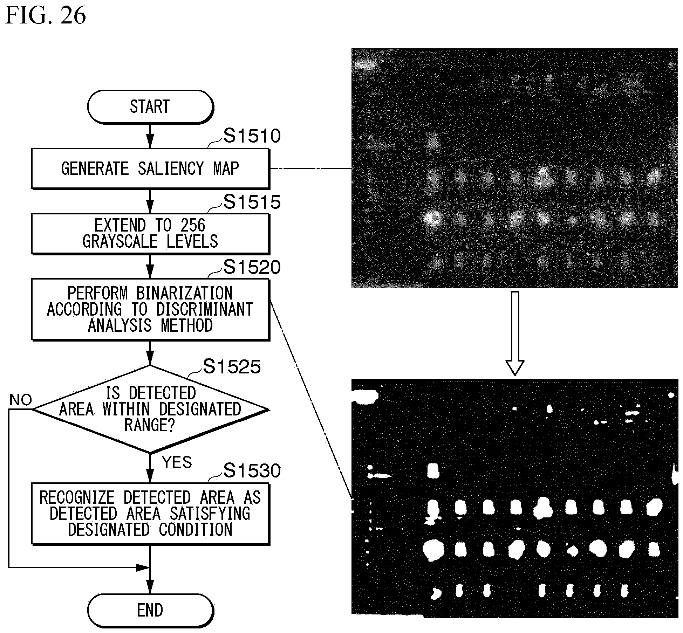

Fig. 26 is a flowchart showing a search process using the attended location extraction function of the scenario execution device 1. The reading unit 553 acquires values of search parameters of the attended location extraction function set by the search condition setting screen 800 shown in Fig. 19. The search parameters are values of an input image, an output image name, a minimum size, and a maximum size. The search unit 554 creates a saliency map from the matching image (step S1510). The saliency map is a map in which the area that humans pay attention to within the image is quantified. Any map can be used for the saliency map. As an example of the calculation model of the saliency map, luminance information, color information, gradient direction information, and the like are used.

The search unit 554 extracts an area indicated by the input image from the saliency map and extends the saliency value of the extracted area to 256 gradation levels (step S1515). The search unit 554 separates saliency values of the saliency map extended to 256 gradation levels in step S1515 into an attended area and a non-attended area by binarizing the saliency value by a discriminant analysis method (step S1520). The search unit 554 determines whether or not the rectangle surrounding the attended area is within the designated range (step S1525). The designated range is a range greater than or equal to the minimum size indicated by the search parameter and less than or equal to the maximum size indicated by the search parameter. For example, when the target image is an icon, there is a high probability that an area larger than the designated range is not the icon display area. When the search unit 554 determines that the detected area is not within the designated range (step S1525: NO), the search unit 554 ends the process. When the search unit 554 determines that the detected area is within the designated range (step S1525: YES), the search unit 554 recognizes the detected area as a detected area satisfying the search condition (step S1530).

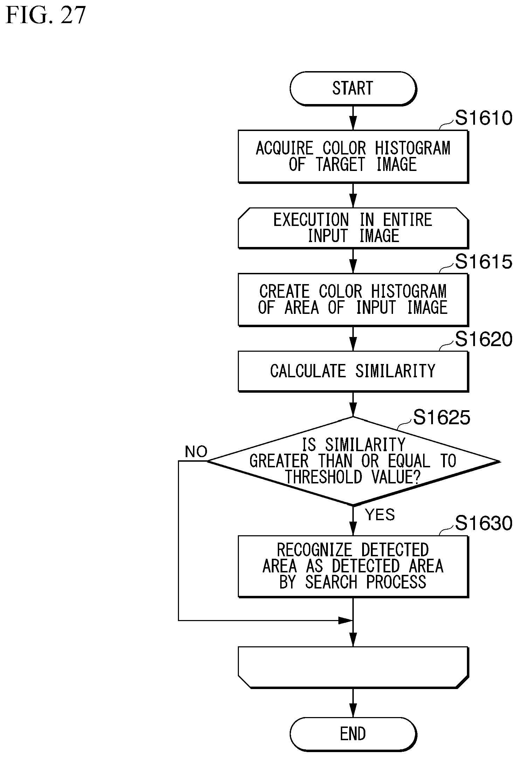

Fig. 27 is a flowchart showing a search process using the similar color histogram area search function of the scenario execution device 1. The reading unit 553 acquires a target image and values of search parameters set by the search condition setting screen 820 shown in Fig. 20 from the search scenario file. The search parameters are an input image, an output image name, an effective similarity, a minimum size, and a maximum size. The search unit 554 acquires a color histogram of the target image (step S1610). The search unit 554 performs the processing of steps S1615 to S1630 while moving the area over the entire input image. The size of the area is determined by the minimum size and the maximum size indicated by the search parameters. First, the search unit 554 calculates the color histogram of the current area in the input image (step S1615). The search unit 554 calculates the similarity between the color histogram of the target image calculated in step S1610 and the color histogram calculated in step S1620 for the area of the input image (step S1620). The search unit 554 determines whether or not the calculated similarity satisfies the effective similarity indicated by the search parameter (step S1625). When the search unit 554 determines that the effective similarity is not satisfied (step S1625: NO), the search unit 554 moves the area in the input image. On the other hand, when the search unit 554 determines that the effective similarity is satisfied (step S1625: YES), the search unit 554 recognizes a current area on the input image as the detected area (step S1630).

According to the above-described embodiment, the user can combine the search processes according to the target image. According to this combination, the scenario execution device 1 can continue the subsequent search process using the search process result obtained during the execution of the search scenario as an input image. Also, the user can create a search scenario while confirming the search result during the creation of the search process. In addition, the user can adjust the search process with a small amount of calculation while changing the value of the search parameter with the slide bar. The user can speed up the process of the scenario execution device 1 by narrowing down the search target area to an area obtained as a result of performing the search according to another search process with respect to the search process having a large amount of calculation.

Note that when the logical OR operation, the logical AND operation, or the weighted addition operation associated with an output image of a search process other than an immediately previous search process is calculated, an input field for inputting a search process whose output result is associated to calculate the logical OR operation, the logical AND operation, or the weighted addition operation is included in the parameter value input area of the search condition setting screen of each search function.

Note that the search parameters of each search function described above are an example, and the scenario execution device 1 may use other search parameters in place of or in addition to the above-described search parameters. The search condition setting screen of each search function includes a button, an input field, a slide bar, a menu, and the like for setting the value of each search parameter for use in the search function.

Note that in the search result display area of the search condition setting screen shown in Figs. 14 to 20, the area obtained as the search result is displayed when the operation method is the logical OR operation or the logical AND operation. When the operation method is the weighted addition operation, the screen display control unit 522 may display the search result display area by superimposing an area of pixels having a score higher than or equal to a predetermined score on the matching image. In this case, the screen display control unit 522 may indicate the area with a line having a color or thickness according to the score, may display the score in the vicinity of the area, and display numbers assigned in descending order of scores. The score of each pixel within the matching image is calculated as follows.

For example, when the weighting addition operation on search processes R1, R2, and R3 is performed, the user assigns a weight w1 to the search process R1, assigns a weight w2 to the search process R2, and assigns a weight w3 to the search process R3. However, w1+w2+w3=1 is set. In this case, the score of a certain pixel x within the matching image is calculated according to, for example, w1×p1+w2×p2+w3×p3. Here, pn (n=1, 2, 3) is a value greater than or equal to 0 and less than or equal to 1. For example, pn=1 may be set when it is included in the area detected by the search process Rn, and pn=0 may be set when it is not included in the area detected by the search process Rn. Also, in the case of the feature color search function, the value of pn may be set to a value from 0 to 1 in accordance with a similarity associated with the selected color. Also, in the case of the circle fitting function, the value of pn may be set to a value from 0 to 1 in accordance with the roundness. Also, in the case of the attended location extraction function, the value of pn may be set to a value from 0 to 1 in accordance with the value of the saliency map obtained in step S1510 or step S1515. Also, in the case of the similar color histogram area search function, the value of pn may be set to a value from 0 to 1 in accordance with the similarity of the color histogram calculated in step S1625.

Also, a method of combining search processes constituting one search procedure may include one or both of the logical AND operation and the logical OR operation and the weighted addition operation. In this case, the scenario execution device 1 may assign a predetermined score such as 1 to a pixel within the area detected in the last search process combined according to the logical AND operation or the logical OR operation.

In this way, the scenario execution device 1 can assign the number of points (a score) according to a search condition (a feature of an image) to areas matching each search condition and detect an area similar to a target image on the basis of a total value of the number of points of the areas. The number of points to be assigned in accordance with each search condition is input by the user. At the time of the search scenario execution end, the scenario execution device 1 may use an area having the largest total number of points as the search result information or may use an area having the number of points larger than a threshold value as the search result information. In this way, it is possible to implement image recognition with high accuracy by quantifying and evaluating a feature of an image.

According to the above-described embodiment, it is possible to create a search scenario without the user programming in accordance with the target image. Consequently, it is possible to detect an area similar or identical to the target image arbitrarily selected by the user from the matching image. In particular, it is effective when incorporated and used in an RPA scenario. It is also possible to provide an image processing function according to the present embodiment in an image processing device other than the scenario execution device 1. In this case, the image processing device includes a storage unit 2, an input unit 3, a display unit 4, a search scenario creation unit 52, and an image recognition unit 550.

Also, although the user generates a scenario using the scenario execution device 1 in the above description, a scenario may be created using a scenario creation device (an information processing device) such as a PC different from the scenario execution device 1.

Also, functions of the scenario execution device 1 of the above-described embodiments may be implemented by a computer. In this case, the above functions may be implemented by recording a program for implementing the functions in a computer-readable recording medium and causing a computer system to read and execute the above-described program recorded in the recording medium. Also, the "computer system" described here is assumed to include an operating system (OS) and hardware such as peripheral devices. Here, the "computer-readable recording medium" refers to a storage device including a flexible disk, a magneto-optical disc, a ROM, a portable medium such as a compact disc (CD)-ROM, and a hard disk embedded in the computer system. Further, the "computer-readable recording medium" is assumed to include a computer-readable recording medium for dynamically retaining a program for a short time as in a communication line when the program is transmitted via a network such as the Internet or a communication circuit such as a telephone circuit and a computer-readable recording medium for retaining the program for a given time period as in a volatile memory inside the computer system including a server and a client when the program is transmitted. Also, the above-described program may be a program for implementing some of the above-described functions. Further, the above-described program may be a program capable of implementing the above-described functions in combination with a program already recorded on the computer system.

According to the above-described embodiment, the image processing device includes a search scenario acquisition unit and a search unit. The image processing device is, for example, the scenario execution device 1. The search scenario acquisition unit acquires a search scenario in which one or more search processes of searching for an image using an image feature based on a target image, which is an image for a target of the search, in a search condition are combined. For example, the combination of search processes includes a logical OR operation, a logical AND operation, or a weighted addition operation. The combination of search processes may further include a selection algorithm. Also, the search condition is a change based on a feature related to a color used in the target image, a feature related to a shape of the target image, an attended area in the matching image, or an operation of a user interface. The search unit searches for a matching image, which is a search target image, using a combination of the search processes represented by the search scenario acquired by the search scenario acquisition unit and outputs search result information representing an area in the matching image detected through the search.

The image processing device may further include a search scenario creation unit and a trial unit. The search scenario creation unit creates the search scenario according to an input of a user. The trial unit searches for the matching image designated through the input of the user using the combination of the search processes represented by the search scenario while the search scenario is being created by the search scenario creation unit and outputs search result information representing an area in the matching image detected through the search.

Although embodiments of the present invention have been described above with reference to the drawings, specific configurations are not limited to the embodiments, and other designs and the like may also be included without departing from the scope of the present invention.

### [Reference Signs List]

1 Scenario execution device
2 Storage unit
3 Input unit
4 Display unit
5 Processing unit
51 Scenario creation unit
52 Search scenario creation unit
53 Scenario execution management unit
54 Scenario execution unit
56 Function X execution unit
56a Function A execution unit
56b Function B execution unit
56c Function C execution unit
511 Creation information reception unit
512 Screen display control unit
513 Scenario registration unit
521 Creation information reception unit
522 Screen display control unit
523 Trial unit
524 Search scenario registration unit
541 Reading unit
542 Determination unit
543 Operation control unit
550 Image recognition unit
551 Search scenario acquisition unit
552 Image acquisition unit
553 Reading unit
554 Search unit

## Claims

1. An image processing device comprising:
a search scenario acquisition unit configured to acquire a search scenario in which one or more search processes of searching for an image using an image feature based on a target image, which is an image of a search target, in a search condition are combined; and
a search unit configured to search for a matching image, which is an image to be searched, using a combination of the search processes represented by the search scenario and output search result information representing an area in the matching image detected through the search.

2. The image processing device according to claim 1, further comprising:
a search scenario creation unit configured to create the search scenario according to an input of a user; and
a trial unit configured to search for the matching image designated through the input of the user using the combination of the search processes represented by the search scenario being created by the search scenario creation unit and output search result information representing an area in the matching image detected through the search.

3. The image processing device according to claim 1 or 2,
wherein the combination of the search processes includes a logical OR operation, a logical AND operation, or a weighted addition operation.

4. The image processing device according to any one of claims 1 to 3,
wherein the search condition is a feature related to a color used in the target image, a feature related to a shape of the target image, an attended area in the matching image, or a change based on an operation of a user interface.

5. An image processing method comprising:
an acquisition step of acquiring a search scenario in which one or more search processes of searching for an image using an image feature based on a target image, which is an image of a search target, in a search condition are combined; and
a search step of searching for a matching image, which is an image to be searched, using a combination of the search processes represented by the search scenario and outputting search result information representing an area in the matching image detected through the search.

6. A program for causing a computer to function as the image processing device according to any one of claims 1 to 4.
